(19) Europäisches Patentamt / European Patent Office / Office européen des brevets

(11) **EP 2 049 331 B1**

(12) **EUROPEAN PATENT SPECIFICATION**

(45) Date of publication and mention
of the grant of the patent:
**12.06.2019 Bulletin 2019/24**

(51) Int Cl.:
**B32B 27/30** *(2006.01)*        **B29C 49/04** *(2006.01)*
**B29C 49/16** *(2006.01)*        **B32B 27/32** *(2006.01)*

(21) Application number: **07785207.7**

(22) Date of filing: **30.07.2007**

(86) International application number:
**PCT/CN2007/002292**

(87) International publication number:
**WO 2008/017244 (14.02.2008 Gazette 2008/07)**

(54) **LAYERED FILM COMPOSITIONS, PACKAGES PREPARED THEREFROM, AND METHODS OF USE**

MEHRSCHICHTFOLIENZUSAMMENSETZUNGEN, DARAUS HERGESTELLTE VERPACKUNGEN UND VERWENDUNGSVERFAHREN

COMPOSITIONS DESTINÉES À FABRIQUER DES FILMS DISPOSÉS EN COUCHES, CONDITIONNEMENTS PRÉPARÉS À PARTIR DE CES COMPOSITIONS ET LEURS PROCÉDÉS D'UTILISATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.07.2006 CN 200610171888**

(43) Date of publication of application:
**22.04.2009 Bulletin 2009/17**

(73) Proprietor: **Dow Global Technologies LLC**
**Midland, MI 48674 (US)**

(72) Inventor: **YUN, Xiaobing**
**Beijing 100053 (CN)**

(74) Representative: **Boult Wade Tennant LLP**
**5th Floor, Salisbury Square House**
**8, Salisbury Square**
**London EC4Y 8AP (GB)**

(56) References cited:
**WO-A2-2004/024433      JP-A- 8 224 842**
**JP-A- 05 245 986         JP-A- 06 115 026**
**JP-A- 2001 030 441       JP-A- 2003 103 731**
**US-A- 4 532 189          US-A- 4 532 189**
**US-A- 5 314 749          US-A- 5 874 139**
**US-A1- 2002 127 421     US-B2- 6 800 363**
**US-B2- 6 800 363**

**Description**

BACKGROUND OF INVENTION

The invention relates to layered film compositions, and in particular, biaxially oriented film compositions made using a double bubble process. The films of the invention have an excellent balance of machine direction (MD) and traverse direction (TD) shrinkage, even at very low shrink temperatures (T ≤ 100°C). The low shrink temperatures allow for the packaging of temperature sensitive goods, fast packaging speed, and/or the packaging of easily deformable articles, such as magazines, stationery.

Uncrosslinked, oriented, multilayered films, such as "propylene-based terpolymers/ polyethylene-based copolymer" multilayered films are known, and commercially used. These films typically have high modulus, but poor shrink levels at low shrink temperatures. Also the seal strength of these conventional uncrosslinked films is relatively low. To improve seal strength, a polyethylene-based film can be crosslinked using irradiation. However, the irradiated crosslinked polyethylene-based films are costly to manufacture, due to the high capital cost of the irradiation process. Moreover, the incumbent oriented, uncrosslinked polypropylene-based and polyethylene-based films have a Heat Seal Initiation Temperature (HSIT) of around 115°C, and show desired degrees of shrinkage only at relatively high temperatures (for example, shrink temperatures of 110-120°C or higher). The incumbent crosslinked polyethylene-based films, such as, linear low density polyethylene films, ethylene vinyl acetate films, ethylene butylacrylate films, or films containing an ionomer, require highly specialized, capital intensive equipment to crosslinked films to the required degree of crosslinking, in order to provide orientation stability (stable second bubble and even film thickness) and good film properties. To achieve high packaging speed, fast shrinkage, low shrinkage temperature and good machinability, that is, high film modulus, are both required. Traditionally, "low shrinkage temperature" biaxially oriented shrinkage films were produced by ULDPE (ultra low density polyethylene), EVA (ethylene vinyl acetate co-polymer), EBA (ethylene butylacrylate), and other materials with low melting points. These materials are very soft, and films made from these materials afford low modulus. The low modulus of the film restricts its packaging speed, because low modulus reduces machineability. Some examples of films in the art are described below.

U.S. Patent 4,532,189 discloses a multi-layer film comprising a core layer comprising linear low density polyethylene or linear medium density polyethylene;
two skin layers comprising a blend of from 70 percent to 90 percent, by weight, of an ethylene propylene copolymer and from 10 percent to 30 percent, by weight, of a propylene homopolymer. The film is disclosed as having an average machine direction free shrink at 93°C (200°F) of at least 12% and an average transverse direction free shrink at 93°C (200°F) of at least 17 percent. See also UK Patent Application No. 2115348A.

U.S. Patent 5,614,315 discloses a heat shrinkable multilayer film, which includes two outer layers consisting essentially of a polyethylene resin, and one or more inner layers interposed between the outer layers. At least one of the inner layers comprises a blend of a polypropylene resin and a substantially linear ethylene/alpha-olefin copolymer. The copolymer has a molecular weight distribution Mw/Mn of not greater than 2, and a melt flow ratio (I10 /I2) of not less than 7.0.

U.S. Patent 6,344,250 discloses a polyolefin shrink film having high shrinkage and low shrink force. The film has a core layer formed from a polymer of ethylene with a melting point of greater than 100°C, outer layers of a homopolymer of ethylene or propylene or an ethylene/alpha-olefin copolymer. The film is not irradiated. The film may be used for the packaging of articles subject to breakage, distortion or deformation, if packaged in shrink films with higher shrink force.

U.S. Patent 4,833,024 discloses a multilayer shrink film which provides very low shrink tension, approximating some PVC films, while providing relatively high free shrink characteristics and relatively low shrink temperatures. The preferred film has five layers, including a core layer comprising a linear low density polyethylene or ethylene propylene copolymer, two outer layers comprising a polymeric material selected from linear low density polyethylene or ethylene propylene copolymer, and two intermediate layers comprising a polymeric material or blend of materials having a melting point of less than 100°C. Suitable materials include ethylene vinyl acetate copolymer, a blend of ethylene vinyl acetate copolymer and very low density polyethylene, ethylene butyl acrylate copolymer, and a blend of ethylene vinyl acetate copolymer and ethylene butyl acrylate copolymer.

International Publication No. WO 91/17886 discloses a multilayered, heat shrinkable film. Preferably, the core of the film is a blend of certain linear low density polyethylene, with certain highly branched low density polyethylene, sandwiched between two relatively thin outer layers of propylene/ethylene copolymer. The core also containing recycle scrap of the multilayer film. See also U.S. Patent 5,128,212.

European Patent Application No. EP 1318173A1 discloses an oriented, multilayer film comprising at least one outer layer, comprising from 50 to 100 weight percent of an ethylene copolymer having a density of 0.900-0.935 g/cc, and a CDBI of 50-95 percent. The outer layer is in contact with a polypropylene core layer, and the film is made by coextrusion of the ethylene copolymer and the polypropylene layer, and subsequent orientation. The coextruded layers can be uniaxially oriented, biaxially oriented on tenter equipment, without difficulties caused by the presence of low molecular weight amorphous polymer fractions, inherently present in traditional Ziegler-Natta linear low density polyethylene. This reference discloses that the optical properties of biaxially oriented polypropylene films can be retained, while the sealing temperature is lowered, and the heat seal strength and the hot tack performance properties are improved.

Japanese Publication No. 06-210730 (Abstract) discloses a polypropylene type, heat-shrinkable laminated film, low in heat shrinkage starting temperature, and having a wide heat shrinkage temperature range. The film is disclosed as suitable as a shrinkable packing film, excellent in tear resistance, low temperature stretchability, low temperature heat sealability, and impact resistance. Polypropylene is used as a resin for a core layer, and a straight chain low density polyethylene resin is used as a resin for both outer layers. The two layers composed of the straight chain low density polyethylene resin are provided on both surfaces of the core layer, by a co-extrusion, three-layered T-die, to produce a co-extrusion, laminated film having a three-layered structure. This co-extrusion laminated film is uniaxially stretched by 2-5 times at stretching temperature of 100°, or lower, by a uniaxial stretching machine, to obtain a uniaxially stretched film with a thickness of about 30 $\mu$m.

Japanese Publication No. 06-115027 discloses a laminated stretch, shrink film for forming a package superior in not only transparency and glossiness, but also elastic recovery power and binding power, without occurrence of odor of an acetate in stretch/shrink packaging. The core layer of the film is made of an ethylene-propylene copolymer, an ethylene-butene-propylene copolymer, or the mixture thereof; each outer layer is made of a straight-chain, low-density polyethylene; and an intermediate layer, between the core layer and the outer layer, is made of a mixture of an ethylene-propylene copolymer, an ethylene-butene- propylene copolymer, or the mixture thereof. The straight-chain, low-density polyethylene has a density of 0.910 to 0.925 g/cc, and the straight-chain, low-density polyethylene has a density of 0.890 to 0.907g/cc.

International Publication No. WO 01/53079 discloses a multilayered blown film having a blended polypropylene layer, and at least one polyethylene sealant layer. In particular, the multilayer film comprises a non-sealant layer made from a propylene-rich polypropylene polymer blended with at least one ethylene-rich ethylene interpolymer, and a sealant layer made from at least one ethylene interpolyme. The ethylene-rich ethylene interpolymer comprises ethylene interpolymerized with at least one other comonomer other than propylene. The multilayer film is disclosed as exhibiting excellent interlayer adhesion and toughness, with acceptable optical properties and sealing properties. The film is preferably made using an air-quenched coextrusion fabrication technique, and is particularly suited for use in making pouches for flowable materials, heavy-duty shipping sacks and overwrap films.

European Patent No. EP 0595701B1 (Abstract) discloses a heat-shrinkable, composite film, comprising a core layer and two outer or intermediate layers applied against each surface of the core layer. The intermediate and/or outer layers are formed by one or more polyolefins, whose flexural modulus is greater than 200 MPa, as per ASTM D 790, and whose Vicat softening point is greater than 100°C (ASTM D 1525). The core layer is formed by a polymer whose flexural modulus is less than 400 MPa (ASTM D 790), and the Vicat softening point is less than 70°C (ASTM D 1525). The polymer is chosen especially from polypropylenes having a high content of alpha olefins, polyolefin elastomeric materials, or their blends.

U.S. Patent 5,051,481 discloses a low-temperature, heat-shrinkable film having a haze value not larger than 8 percent, a heat shrinkability in the machine direction at a temperature of 90°C of at least 30 percent, and a shrinkage stress of at least 300 g/mm$^2$. The film is made from a composition comprising (a) a linear ethylene polymer containing short-chain branches, and having a density not larger than 0.940 g/cc, and (b) an ethylene/propylene random copolymer containing 3.5 to 10 percent by weigh of units derived from ethylene. The proportion of the ethylene/propylene random copolymer in the composition is 15 to 50 percent by weight.

International Publication No. WO 2005/097493 discloses multilayer shrink films, and methods of making same, and which are substantially free of silicone. The multilayer shrink films are produced using film biaxial orienting means. The films are disclosed as having haze values of 5 or less, Young's modulus of 25C MPa (40,000 psi) or greater, and superior hot slip properties. Cyclic-olefin copolymer (COC) is used in the outermost layers to impart superior hot slip. Preferably the film comprises large proportion of linear low density polyethylene (LLDPE) or ethylene propylene butane terpolymer. Suitable COCs for use in the invention are limited to single site catalyzed COC. See also International Publication No. WO 2004/078829.

UK Patent Application No. 2135240A discloses multi-layered films having at least one internal layer comprising a cross-linked linear low density polyethylene or linear medium density polyethylene.

International Publication WO 02/45957 discloses a non-oriented, multilayer film with a polyolefin core, and having 40 weight percent, or less, of a homogeneous ethylene/alpha-olefin; a modified polyolefin tie layer on each side of the core; and an adhesive layer on at least one tie layer. The adhesive layer contains a polar-modified polyolefin and a polyester, copolyester, or polyester/copolyester blend.

International Publication No. WO 03/040202 discloses films with excellent machine direction (MD) tear properties, and which comprise at least one layer made from a polymer comprising: (A) at least 50 weight percent propylene; and (B) at least 5 weight percent ethylene and/or one or more unsaturated comonomers. Preferably, the film has at least one of the following: a (i) haze value of less than 10, (ii) 45 degree gloss of greater than 65, and (iii) dart value of greater than 39 g/$\mu$m (100 g/mil). In a preferred embodiment, the layer comprises a compolymer characterized as having at least one of the following properties: (i) 13C NMR peaks corresponding to a regio-error at 14.6 and 15.7 ppm, the peaks of about equal intensity, (ii) a B-value greater than 1.4, when the comonomer content of the copolymer is at least 3 weight percent, (iii) a skewness index, Six, greater than -1.20, (iv) a DSC curve with a Tme that remains essentially the same and a Tmax that decreases as the amount of comonomer in the copolymer is increased, and (v) an X-ray diffraction pattern that reports more gamma-form crystals than a comparable copolymer prepared with a Ziegler-Natta (Z-N) catalyst.

WO-A-2004/024433 discloses a coextruded hot-blown film having at least three layers, the film comprising a core layer and, optionally, at least one intermediate layer sandwiched between two skin layers, the film having a haze value of less than 15%, a 2% secant modulus greater than 350MPa and a cross-directional (CD) shrinkage greater than 0%.

US-B-5,314,749 discloses a multiple layer shrink film comprising an internal layer comprising high density polyethylene, and outer layers each comprising olefinic polymer or copolymer.

US-B-6,800,363 discloses a biaxially oriented polyolefin multilayer film having a skin layer having oil-absorbing porous particles.

JP 8224842 discloses a laminated film consisting of at least three layers. Each outer layer has a density of 0.870 to 0.910 g/cm³ and consists of an ethylene-a olefin copolymer A (ethylene content is 50% or more) having a melting point with only one endothermic peak by differential thermal analysis, an ethylene-$\alpha$-olefin copolymer B (ethylene content is 50 mol% or more) having a density of 0.910 to 0.935 g/cm³ and a cloud-proof agent. In addition, the density of the copolymer B is higher than that of the copolymer A by 0.008 g/cm³ or more and a core layer consists of a propylene polymer.

JP 2003103731 discloses a multi-layered film structured of at least three layers. Layer X contains an ethylene-$\alpha$-olefin copolymer with a density of 870 to 910 kg/m³; Layer Y contains an ethylene polymer with a melt flow rate of 0.5 to 10g/10 min at 190°C and a swelling ratio of 1.4 to 1.8; and layer Z contains a propylene polymer, with at least one of the surface layers being the layer X.

Additional film compositions are described in U.S. Patent 5,306,549; U.S. Patent 4,354,997; U.S. Patent 4,820,557; U.S. Patent 4,801,652; U.S. Patent 4,814,135; U.S. Publication 2002/0068182; International Publications 04/060670, WO 89/01402 (Abstract); WO 05/103123; and European Patents EP 0350859B1; EP0388177B1 ; and EP0710546B1.

There remains a need for improved uncrosslinked, oriented film having superior shrink levels at low temperature and orientation stability, as well as excellent seal strength, excellent optical properties and good toughness. The films should have excellent tensile and sealing properties, enabling their use in applications requiring good toughness. In addition, the films have a combination of high film modulus with low film shrinkage temperature, and are thus suited for fast packaging applications. There is a further need for uncrosslinked, oriented films with reduced HSIT of 100°C or lower, improve film seal strength, improved toughness, and improved interlayer adhesion. There is also a need for films which have both high modulus and low shrinkage temperature. Some of these needs and others have been met by the following invention.

SUMMARY OF THE INVENTION

The invention provides a film, comprising at least three layers, an inner layer and at least two outer layers located at opposite surfaces of the inner layer, and
wherein the inner layer is formed from a composition comprising an ethylene-based interpolymer, which has a density from 0.87 g/cc to 0.94 g/cc, and a, melt index (I2) from 0.5 g/10 min to 10 g/10 min, and
wherein at least one outer layer is formed from a composition comprising a propylene- based interpolymer, which has a density from 0.86 g/cc to 0.89 g/cc, and a melt flow rate (MFR) from 1 g/10 min to 15 g/10 min, and wherein the film comprises one of the following: a) greater than 90 weight percent of one ethylene/a-olefin interpolymer and on4 ipropylene-based interpolymer, based on the total weight of |the film, and wherein the propylene-based interpolymer is iused in an outer layer as a sole polymeric component or as d] blend with another propylene-based interpolymer; or b) an buter layer formed from a composition comprising greater than 90 weight percent of two propylene-based interpolymers,; based on the total weight of the composition.

The invention also provides an article comprising at least one component formed from the film and a film comprising at least three layers, an inner layer and at least two outer layers located at opposite surfaces of the inner layer, and
wherein the inner layer is formed from a composition comprising a first propylene-based interpolymer, which has a density from 0.83 g/cc to 0.89 g/cc, and a melt flow rate (MFR) from 0.5 g/10 min to 10 g/10 min, and
wherein at least one outer layer is formed from a composition comprising a second propylene-based interpolymer, which has a density from 0.86 g/cc to 0.91 g/cc, and a melt flow rate (MFR) from 1 g/10 min to 15 g/10 min.

The invention also provides a film, comprising at least three layers, an inner layer and at least two outer layers located at opposite surfaces of the inner layer, and

wherein the inner layer is formed from a composition comprising a propylene-based interpolymer, which has a density from 0.86 g/cc to 0.89 g/cc, and a melt flow rate (MFR) from 1 g/10 min to 15 g/10 min, and

wherein at least one outer layer is formed from a composition comprising an ethylene-based interpolymer, which has a density from 0.87 g/cc to 0.94 g/cc, and a melt index (I2) from 0.5 g/10 min to 10 g/10 min.

The invention also provides a method for forming a film comprising at least three layers, an inner layer and at least two outer layers located at opposite surfaces of the inner layer, said method comprising:

a) selecting the polymer composition for the formation of each layer of the film composition;
b) coextruding the compositions of each film layer to form a first film composition;
c) subjecting the first film composition to a double bubble process to form the film; and

wherein the inner layer is formed from a composition comprising an ethylene-based interpolymer, which has a density from 0.87 g/cc to 0.94 g/cc, and a melt index (I2) from 0.5 g/10 min to 10 g/10 min, and

wherein at least one outer layer is formed from a composition comprising a propylene-based interpolymer, which has a density from 0.86 g/cc to 0.89 g/cc, and a melt flow rate (MFR) from 1 g/10 min to 15 g/10 min.

The invention also provides a method for forming a film comprising at least three layers, an inner layer and at least two outer layers located at opposite surfaces of the inner layer, said method comprising:

a) selecting the polymer composition for the formation of each layer of the film composition;
b) coextruding the compositions of each film layer to form a first film composition;
c) subjecting the first film composition to a double bubble process to form the film; and

wherein the inner layer is formed from a composition comprising a first propylene-based interpolymer, which has a density from 0.83 g/cc to 0.89 g/cc, and a melt flow rate (MFR) from 0.5 g/10 min to 10 g/10 min, and

wherein at least one outer layer is formed from a composition comprising a second propylene-based interpolymer, which has a density from 0.86 g/cc to 0.91 g/cc, and a melt flow rate (MFR) from 1 g/10 min to 15 g/10 min.

The invention also provides a method for forming a film comprising at least three layers, an inner layer and at least two outer layers located at opposite surfaces of the inner layer, said method comprising:

a) selecting the polymer composition for the formation of each layer of the film composition;
b) coextruding the compositions of each film layer to form a first film composition;
c) subjecting the first film composition to a double bubble process to form the film; and

wherein the inner layer is formed from a composition comprising a propylene-based interpolymer, which has a density from 0.86 g/cc to 0.89 g/cc, and a melt flow rate (MFR) from 1 g/10 min to 15 g/10 min, and

wherein at least one outer layer is formed from a composition comprising an ethylene-based interpolymer, which has a density from 0.87 g/cc to 0.94 g/cc, and a melt index (I2) from 0.5 g/10 min to 10 g/10 min.

BRIEF DESCRIPTION OF THE DRAWINGS

Figure 1 is a plot of seal strength versus sealing bar temperature for polyethylene terephthalate (PET) films laminated with an inventive film composition and a conventional film.
Figure 2 is a plot of seal strength versus sealing bar temperature for an inventive film composition and a conventional film composition.

DETAILED DESCRIPTION OF THE INVENTION

*Overview*

As discussed above, the invention provides a film, comprising at least three layers, an inner layer and at least two outer layers located at opposite surfaces of the inner layer, and wherein the inner layer is formed from a composition comprising an ethylene-based interpolymer, which has a density from 0.87 g/cc to 0.94 g/cc, and a melt index (I2) from 0.5 g/10 min to 10 g/10 min, and preferably from 0.5 g/10 min to 5 g/10 min, and wherein at least one outer layer is formed from a composition comprising a propylene-based interpolymer, which has a density from 0.86 g/cc to 0.89 g/cc, and a melt flow rate (MFR) from 1 g/10 min to 15 g/10 min, and preferably from 1 g/10 min to 10 g/10 min. In another embodiment, the propylene-based interpolymer has a melt flow rate (MFR) from 1 g/10 min to 5 g/10 min, or from 1 g/10 min to 3 g/10 min. Each of the three layers is not subject to a crosslinking reaction.

In one embodiment of the invention, the at least two outer layers are formed from the same composition. In another embodiment of the invention, each of the two outer layers is adjacent to a surface of the inner layer.

In another embodiment, ethylene-based interpolymer is a linear low density ethylene/$\alpha$-olefin interpolymer. In a further embodiment, the $\alpha$-olefin is selected from the group consisting of C3-C12 $\alpha$-olefins. In yet another embodiment, $\alpha$-olefin of the ethylene/$\alpha$-olefin interpolymer is selected from 1-butene, 1-pentene, 1-hexene, 1-heptene or 1-octene, and more preferably selected from 1-butene, 1-hexene, or 1-octene, and even more preferably 1-butene or 1-octene.

In another embodiment of the invention, the ethylene-based interpolymer has a melt index ($I_2$) from 0.5 g/10 min to 6 g/10 min, and preferably from 0.7 g/10 min to 3 g/10 min. In another embodiment, the ethylene-based interpolymer has a density from 0.87 g/cc to 0.93 g/cc, preferably from 0.87 g/cc to 0.925 g/cc, and more preferably from 0.87 g/cc to 0.92 g/cc. In a further embodiment, the ethylene-based interpolymer has a melt index from 0.7 to 3 grams/10 minutes, a density from 0.87 g/cc to 0.93 g/cc, preferably from 0.87 g/cc to 0.925 g/cc, and more preferably from 0.87 g/cc to 0.92 g/cc. In a further embodiment, the ethylene-based interpolymer is an ethylene/a-olefin interpolymer. In another embodiment, the ethylene-based interpolymer is a linear low density ethylene/a-olefin interpolymer.

In another embodiment of the invention, the propylene-based interpolymer is a propylene/a-olefin interpolymer. In a further embodiment, the $\alpha$-olefin is selected from 1-butene, 1-pentene, 1-hexene, 1-heptene or 1-octene. In another embodiment of the invention, the propylene-based interpolymer is a propylene/ethylene interpolymer. In another embodiment of the invention, the propylene-based interpolymer is a propylene/ethylene copolymer.

In another embodiment of the invention, the propylene-based interpolymer has a melt flow rate (MFR) from 2 g/10 min to 10 g/10 min. In another embodiment, the propylene-based interpolymer has a density from 0.87 g/cc to 0.89 g/cc. In a further embodiment, the propylene-based interpolymer has a melt flow rate from 2 to 10 grams/10 minutes, a density from 0.87 g/cc to 0.89 g/cc. In another embodiment of the invention, the first propylene-based interpolymer is a propylene/ethylene interpolymer. In another embodiment of the invention, the first propylene-based interpolymer is a propylene/ethylene copolymer.

In another embodiment, the propylene-based interpolymer is a copolymer of propylene and ethylene, or a terpolymer of propylene, ethylene and butene. In another embodiment, the ethylene/a-olefin interpolymer is a copolymer of ethylene and 1-butene, a copolymer of ethylene and 1-octene, or a copolymer of ethylene and 1-hexene.

In another embodiment of the invention, a film layer may be formed from a composition comprising both an ethylene-based interpolymer and a propylene-based interpolymer.

In another embodiment, the composition used to form the inner layer further comprises a propylene-based polymer. In a further embodiment, the composition, used to form the inner layer, comprises from 50 to 80 weight percent of the ethylene-based interpolymer, and from 20 to 50 weight percent of the propylene-based interpolymer, and wherein each weight percent is based on the sum weight of the propylene-based interpolymer and the ethylene-based interpolymer. In another embodiment, the ethylene-based interpolymer is an ethylene/a-olefin interpolymer. In yet another embodiment, the ethylene/a-olefin interpolymer has a density from 0.87 g/cc to 0.93 g/cc, preferably from 0.87 g/cc to 0.925 g/cc, and more preferably from 0.87 g/cc to 0.92 g/cc. In another embodiment, the ethylene/a-olefin interpolymer has a melt index (I2) from 0.6 g/10 min to 7 g/10 min, preferably from 0.7 g/10 min to 3 g/10 min.

In another embodiment, the film composition comprises at least five layers.

In another embodiment, each layer of the film comprises from 10 to 90 percent, preferably from 15 to 80 percent, and more preferably from 20 to 70 percent of the total thickness of the film composition.

In another embodiment of the invention, the film comprises: (a) one or two propylene-based interpolymers and (b) a linear low density polyethylene, and more preferably a linear low density ethylene/1-octene copolymer, a linear low density ethylene/1-hexene copolymer, or a linear low density ethylene/1-butene copolymer, as the main components (greater than 90 weight percent, based on the total weight of the film) of the film. Preferably each propylene-based interpolymer is a propylene/C4-C8 $\alpha$-olefin interpolymer or a propylene/ethylene interpolymer. In one embodiment, each propylene-based interpolymer is a propylene/ethylene copolymer.

The invention also provides a film composition, comprising at least three layers, an inner layer and at least two outer layers located at opposite surfaces of the inner layer, and where the inner layer is formed from a composition comprising a first propylene-based interpolymer, which has a density from 0.83 g/cc to 0.89 g/cc, or 0.83 g/cc to 0.88 g/cc, and a melt flow rate (MFR) from 0.5 g/10 min to 10 g/10 min, preferably from 0.5 g/10 min to 5 g/10 min, and where at least one outer layer is formed from a composition comprising a second propylene-based interpolymer, which has a density from 0.86 g/cc to 0.91 g/cc, and a melt flow rate (MFR) from 1 g/10 min to 15 g/10 min, and preferably from 1 g/10 min to 10 g/10 min. Each of the three layers is not subject to a crosslinking reaction.

The second propylene-based interpolymer is different from the first propylene-based interpolymer in one or more of the following features: density, melt flow rate, monomeric constituents, or amount of each monomeric constituent. The same comparison applies in reference to a second propylene-based interpolymer and a third propylene-based interpolymer, as discussed below.

In one embodiment of the invention, the at least two outer layers are formed from the same composition. In another embodiment, each of the two outer layers is adjacent to a surface of the inner layer.

In another embodiment of the invention, the first propylene-based interpolymer is a propylene/a-olefin interpolymer. In a further embodiment, the α-olefin is selected from the group consisting of ethylene and C4-C12 α-olefins. In a further embodiment, the α-olefin of the first propylene/a-olefin interpolymer is selected from 1-butene, 1-pentene, 1-hexene, 1-heptene or 1-octene. In a preferred embodiment, the α-olefin is ethylene. In another embodiment of the invention, the first propylene-based interpolymer is a propylene/ethylene interpolymer. In another embodiment of the invention, the first propylene-based interpolymer is a propylene/ethylene copolymer.

In another embodiment of the invention, the first propylene-based interpolymer has a melt flow rate (MFR) from 1 g/10 min to 3 g/10 min. In another embodiment, the first propylene-based interpolymer has a density from 0.84 g/cc to 0.89 g/cc, or from 0.84 g/cc to 0.88 g/cc, or from 0.84 g/cc to 0.87 g/cc. In a further embodiment, the first propylene-based interpolymer has a melt flow rate from 1 to 3 grams/10 minutes, a density from 0.84 g/cc to 0.89 g/cc, or from 0.84 g/cc to 0.88 g/cc, or from 0.84 g/cc to 0.87 g/cc.

In another embodiment of the invention, the second propylene-based interpolymer is a propylene/α-olefin interpolymer. In a further embodiment, the α-olefin is selected from the group consisting of ethylene and C4-C12 α-olefins. In a further embodiment, the α-olefin of the second propylene/a-olefin interpolymer is selected from 1-butene, 1-pentene, 1-hexene, 1-heptene or 1-octene. In another embodiment of the invention, the second propylene-based interpolymer is a propylene/ethylene interpolymer. In another embodiment of the invention, the second propylene-based interpolymer is a propylene/ethylene copolymer.

In another embodiment of the invention, the second propylene-based interpolymer has a melt flow rate (MFR) from 2 g/10 min to 10 g/10 min. In another embodiment, the second propylene-based interpolymer has a density from 0.86 g/cc to 0.90 g/cc, and preferably from 0.86 g/cc to 0.89 g/cc. In a further embodiment, the second propylene-based interpolymer has a melt index from 2 to 10 grams/10 minutes, a density from 0.86 g/cc to 0.90 g/cc, and preferably from 0.86 g/cc to 0.89 g/cc. In another embodiment of the invention, the second propylene-based interpolymer is a propylene/ethylene interpolymer. In another embodiment of the invention, the second propylene-based interpolymer is a propylene/ethylene copolymer.

In another embodiment of the invention, the film comprises two or three a propylene-based interpolymers as the main components (greater than 90 weight percent, based on the total weight of the film) of the film. Preferably each propylene-based interpolymer is a propylene/C4-C8 α-olefin interpolymer or a propylene/ethylene interpolymer. In one embodiment, each propylene-based interpolymer is a propylene/ethylene copolymer.

In another embodiment of the invention, a film layer may be formed from a composition comprising both an ethylene-based interpolymer and a propylene-based interpolymer.

In another embodiment, the composition, used to form the inner layer, further comprises an ethylene-based interpolymer. In a further embodiment, the composition, used to form the inner layer, comprises from 50 to 80 weight percent, preferably from 55 to 75 weight percent, and more preferably from 60 to 70 weight percent of the propylene-based interpolymer; and from 20 to 50 weight percent, preferably from 25 to 45 weight percent, and more preferably from 30 to 40 weight percent of the ethylene-based interpolymer; and wherein each weight percent is based on the sum weight of the propylene-based interpolymer and the ethylene-based interpolymer. In another embodiment, the ethylene-based interpolymer is an ethylene/a-olefin interpolymer. In another embodiment, the ethylene/a-olefin interpolymer has a density from 0.87 g/cc to 0.93 g/cc, preferably from 0.87 g/cc to 0.925 g/cc, and more preferably from 0.87 g/cc to 0.92 g/cc. In another embodiment, the ethylene/a-olefin interpolymer has a melt index (12) from 0.7 g/10 min to 3 g/10 min.

In another embodiment, the composition, used to form the outer layer, further comprises an ethylene-based interpolymer.

In another embodiment of the invention, the film comprises: (a) two or three a propylene-based interpolymers and (b) a linear low density polyethylene, and more preferably a linear low density ethylene/1-octene copolymer, a linear low density ethylene/1-hexene copolymer, or a linear low density ethylene/1-butene copolymer, as the main components (greater than 90 weight percent, based on the total weight of the film) of the film. Preferably each propylene-based interpolymer is a propylene/C4-C8 α-olefin interpolymer or a propylene/ethylene interpolymer. In one embodiment, each propylene-based interpolymer is a propylene/ethylene copolymer.

In another embodiment, the film composition comprises at least five layers.

In another embodiment, each layer of the film composition comprises from 10 to 90 percent, preferably from 15 to 80 percent, and more preferably from 20 to 70 percent of the total thickness of the film.

The invention also provides a film composition, comprising at least three layers, an inner layer and at least two outer layers located at opposite surfaces of the inner layer, and where the inner layer is formed from a composition comprising a propylene-based interpolymer, which has a density from 0.86 g/cc to 0.91 g/cc, preferably from 0.86 g/cc to 0.90 g/cc, ad more preferably from 0.86 g/cc to 0.89 g/cc, and a melt flow rate (MFR) from 1 g/10 min to 15 g/10 min, and preferably 1 g/10 min to 10 g/10 min, and where at least one outer layer is formed from a composition comprising an ethylene-based interpolymer, which has a density from 0.87 g/cc to 0.94 g/cc, and a melt index (I2) from 0.5 g/10 min to 10 g/10 min, and preferably 0.5 g/10 min to 5 g/10 min. Each of the three layers is not subject to a crosslinking reaction.

In one embodiment of the invention, the at least two outer layers are formed from the same composition. In another embodiment of the invention, each of the two outer layers is adjacent to a surface of the inner layer.

In another embodiment of the invention, ethylene-based interpolymer is a linear low density ethylene/a-olefin interpolymer. In a further embodiment, the $\alpha$-olefin is selected from the group consisting of C3-C12 $\alpha$-olefins. In yet another embodiment, $\alpha$-olefin of the ethylene/a-olefin interpolymer is selected from 1-butene, 1-pentene, 1-hexene, 1-heptene or 1-octene, and more preferably selected from 1-butene, 1-hexene, or 1-octene, and even more preferably 1-butene or 1-octene.

In another embodiment of the invention, the ethylene-based interpolymer has a melt index ($I_2$) from 0.5 g/10 min to 6 g/10 min, preferably from 0.7 g/10 min to 3 g/10 min. In another embodiment, the ethylene-based interpolymer has a density from 0.87 g/cc to 0.93 g/cc, preferably from 0.87 g/cc to 0.925 g/cc, and more preferably from 0.87 g/cc to 0.92 g/cc. In a further embodiment, the ethylene-based interpolymer has a melt index from 0.5 to 6 grams/10 minutes, and preferably from 0.7 to 3 grams/10 minutes, a density from 0.87 g/cc to 0.93 g/cc, preferably from 0.87 g/cc to 0.925 g/cc, and more preferably from 0.87 g/cc to 0.92 g/cc. In a further embodiment, the ethylene-based interpolymer is an ethylene/a-olefin interpolymer. In another embodiment, the ethylene-based interpolymer is a linear low density ethylene/a-olefin interpolymer.

In another embodiment of the invention, the propylene-based interpolymer is a propylene/a-olefin interpolymer. In a further embodiment, the $\alpha$-olefin is selected from 1-butene, 1-pentene, 1-hexene, 1-heptene or 1-octene. In another embodiment of the invention, the propylene-based interpolymer is a propylene/ethylene interpolymer. In another embodiment of the invention, the propylene-based interpolymer is a propylene/ethylene copolymer.

In another embodiment of the invention, the propylene-based interpolymer has a melt flow rate (MFR) from 2 g/10 min to 10 g/10 min. In another embodiment, the propylene-based interpolymer has a density from 0.87 g/cc to 0.89 g/cc. In a further embodiment, the propylene-based interpolymer has a melt flow rate from 2 to 10 grams/10 minutes, a density from 0.87 g/cc to 0.89 g/cc. In another embodiment of the invention, the propylene-based interpolymer is a propylene/ethylene interpolymer. In another embodiment of the invention, the propylene-based interpolymer is a propylene/ethylene copolymer.

In another embodiment, the propylene-based interpolymer is a copolymer of propylene and ethylene, or a terpolymer of propylene, ethylene and butene. In another embodiment, the ethylene/a-olefin interpolymer is a copolymer of ethylene and 1-butene, a copolymer of ethylene and 1-octene, or a copolymer of ethylene and 1-hexene.

In another embodiment of the invention, a film layer may be formed from a composition comprising both an ethylene-based interpolymer and a propylene-based interpolymer.

In another embodiment, the composition used to form the inner layer further comprises an ethylene-based polymer. In a further embodiment, the composition, used to form the inner layer, comprises from 50 to 80 weight percent, preferably 60 to75 weight percent of the propylene-based interpolymer, and from 20 to 50 weight percent, preferably 24 to 40 weight percent of the ethylene-based interpolymer, and wherein each weight percent is based on the sum weight of the propylene-based interpolymer and the ethylene-based interpolymer. In another embodiment, the ethylene-based interpolymer is an ethylene/$\alpha$-olefin interpolymer. In yet another embodiment, the ethylene/a-olefin interpolymer has a density from 0.87 g/cc to 0.93 g/cc. In another embodiment, the ethylene/a-olefin interpolymer has a melt index (I2) from 0.7 g/10 min to 3 g/10 min.

In another embodiment of the invention, a film layer may be formed from a composition comprising both an ethylene-based interpolymer and a propylene-based interpolymer.

In another embodiment, the composition, used to form the outer layer, further inner layer further comprises a propylene-based interpolymer.

In another embodiment, the film composition comprises at least five layers.

In another embodiment, each layer of the film comprises from 10 to 90 percent, preferably from 15 to 80 percent, and more preferably from 20 to 70 percent of the total thickness of the film composition.

The invention also provides a method for forming an inventive film, said method comprising:

a) selecting the polymer composition for the formation of each layer of the film composition;
b) coextruding the compositions of each film layer to form a first film composition;
c) subjecting the first film composition to a double bubble process to form the film.

The invention also provides an article comprising at least one component formed from an inventive film. The invention also provides for methods of making the same.

The invention also provides a package comprising at least one component formed from an inventive film. The invention also provides for methods of making the same.

The invention also provides a laminated substrate comprising a laminate formed from an inventive film. In another embodiment, the substrate is formed from a composition comprising a polyester. In a further embodiment, the polyester is polyethyleneterephthalate.

An inventive film may comprise a combination of two or more suitable embodiments as described herein.

A film layer of an inventive film may comprise a combination of two or more suitable embodiments as described herein.

A composition used to form a film layer of an inventive film may comprise a combination of two or more suitable embodiments as described herein.

A method for making an inventive film may comprise a combination of two or more suitable embodiments as described herein.

An article, comprising at least one component formed from an inventive film, may comprise a combination of two or more suitable embodiments as described herein.

A package, comprising at least one component formed from an inventive film, may comprise a combination of two or more suitable embodiments as described herein.

A method of making an inventive article may comprise a combination of two or more suitable embodiments as described herein.

A method of making an inventive package may comprise a combination of two or more suitable embodiments as described herein.

In a preferred embodiment, an inventive film has a high shrink level (for example > 20%, and preferably > 25%) at low temperatures, such as temperatures from 90°C to 110°C. In another embodiment, the shrink levels are very balanced, such that the shrinkage in the machine direction (MD) approximately equals (within $\pm$ 10%, preferably $\pm$ 8%, more preferably $\pm$ 5%,) the shrinkage in the traverse direction (TD), at 90°C. In another embodiment, the shrink levels are very balanced, such that the shrinkage in the machine direction (MD) approximately equals (within $\pm$ 10%, preferably $\pm$ 8%, more preferably $\pm$ 5%,) the shrinkage in the traverse direction (TD), at 100°C. In another embodiment, the shrink levels are very balanced, such that the shrinkage in the machine direction (MD) approximately equals (within $\pm$ 10%, preferably $\pm$ 8%, more preferably $\pm$ 5%,) the shrinkage in the traverse direction (TD), at 110°C.

In another embodiment, an inventive film has a 30%-50% improvement in seal strength, compared with the existing conventional films, such as Crosslinked Film D-940 Sealed Air. In another embodiment, an inventive film has a tensile strength that is greater than 10 percent, preferably greater than 20 percent, and more preferably greater than 30 percent, as compared to Crosslinked Film D-940 Sealed Air. In another embodiment, an inventive film has a greater tensile elongation (MD or TD) as compared to Crosslinked Film D-940 Sealed Air.

In another embodiment, an inventive film has a combination of low shrinkage temperature ($\leq$ 120°C, preferably $\leq$ 110°C, and more preferably $\leq$ 100°C), and high MD modulus ($\geq$ 200MPa, preferably $\geq$ 300MPa, and more preferably $\geq$ 400MPa).

In another embodiment, an inventive film has improved seal strength, tensile properties and shrink levels at low temperature, compared with existing films. These improvements provide a better package integrity. In addition, the increased shrink levels at low temperatures improve the appearance of the goods, following the packaging process. In particular, "dog ears," which are formed from poor shrinkage, are reduced in size.

In another embodiment, an inventive film has a seal strength greater than 7 N, at 10-20 $\mu$m (micron) total film thickness, and 90°C, preferably greater than 10 N at 10-20 $\mu$m (micron), and 90°C, and more preferably greater than 15 N, at 10-20 $\mu$m (micron) and 90°C, as measured as the force between an outer layer and an outer layer of the film composition.

In another embodiment, an inventive film has a shrinkage (in both the MD and TD directions) of at least 10 percent, preferably at least 20 percent, and more preferably at least 30 percent, at a temperature from 90°C to 120°C, more preferably from 90°C to 110°C, and even more preferably from 90°C to 100°C.

In another embodiment, an inventive film has high shrink levels ($\geq$ 20%, preferably $\geq$ 30%) at low shrink temperatures ($\leq$ 100°C, preferably $\leq$ 90°C). The levels of shrinkage are generated without irradiation of the film. In another embodiment, the film performance is comparable in shrink and toughness to a commercial irradiated polyethylene-based film.

In another embodiment, an inventive film has a shrinkage in the MD direction from 30 to 70 percent, at a temperature from 90°C to 120°C, and more preferably from 90°C to 110°C, and even more preferably from 90°C to 100°C. In another embodiment, an inventive film has a shrinkage in the TD direction from 30 to 70 percent, at a temperature from 90°C to 120°C, and more preferably from 90°C to 110°C, and even more preferably from 90°C to 100°C.

In another embodiment, an inventive film has a Heat Seal Initiation Temperature (HSIT) less than, or equal to, 100°C.

In another embodiment, an inventive film has a seal strength greater than 7 N, at 10-20 $\mu$m (micron) total film thickness, and 90°C, preferably greater than 10 N, at 10-20 $\mu$m (micron), and 90°C, and more preferably greater than 15 N, at 10-20 $\mu$m (micron), and 90°C, as measured as the force between an outer layer and an outer layer of the film composition, and the film has shrinkage of at least 20 percent, preferably at least 30 percent (in both the MD and TD directions), at a temperature from 90°C to 120°C, more preferably from 90°C to 110°C, and even more preferably from 90°C to 100°C.

In another embodiment, an inventive film has a shrinkage ratio, (MD Shrinkage)/(TD Shrinkage), from 0.50 to 1.50, and preferably from 0.75 to 1.25, and more preferably from 0.90 to 1.10, at a temperature from 90°C to 120°C, more preferably from 90°C to 110°C, and even more preferably from 90°C to 100°C.

In another embodiment, an inventive film has an improved tensile elongation (up to 100%) compared with existing propylene-based terpolymer films.

The films of the invention comprise at least three layers. Each or the three film layers is not subject to a crosslinking reaction. In a preferred embodiment, an inventive film contains only three layer, an inner layer and two outer layers. In a further embodiment, the two outer layers are formed from the same resin composition (for example, A/B/A film structure).

In one embodiment, the seal strength at a specified temperature of an A/B/A composition, where the two outer layers are formed from a propylene-based interpolymer, such as a propylene/ethylene copolymer, and the inner layer is formed from an ethylene-based interpolymer, such as a linear low density ethylene/$\alpha$-olefin copolymer, is increased by 50 percent or more, relative to the film composition containing an inner layer formed from the same ethylene-based interpolymer, and two outer layers formed from propylene-based terpolymer, such as a propylene/ethylene/butene terpolymer.

In one embodiment, a film inner layer is formed from a composition comprising greater than 90 weight percent, and preferably greater than 95 weight percent of one ethylene-based interpolymer (based on the total weight of the composition). Preferably the ethylene/a-olefin interpolymer is an ethylene/a-olefin interpolymer.

In another embodiment, a film inner layer is formed from a composition comprising greater than 90 weight percent, and preferably greater than 95 weight percent of one propylene-based interpolymer (based on the total weight of the composition). Preferably the propylene-based interpolymer is a propylene/C4-C8 $\alpha$-olefin interpolymer or a propylene/ethylene interpolymer.

In another embodiment, a film inner layer is formed from a composition comprising greater than 90 weight percent, and preferably greater than 95 weight percent of two propylene-based interpolymers (based on the total weight of the composition). Preferably, each interpolymer is independently a propylene/C4-C8 $\alpha$-olefin interpolymer or a propylene/ethylene interpolymer.

In another embodiment, a film inner layer is formed from a composition comprising greater than 90 weight percent, and preferably greater than 95 weight percent of one ethylene-based interpolymer and one propylene-based interpolymer (based on the total weight of the composition). Preferably, the propylene-based interpolymer is a propylene/C4-C8 $\alpha$-olefin interpolymer or a propylene/ethylene interpolymer. Preferably, the ethylene-based interpolyme is an ethylene/a-olefin interpolymer.

In another embodiment, a film outer layer is formed from a composition comprising greater than 90 weight percent, and preferably greater than 95 weight percent of one propylene-based interpolymer (based on the total weight if the composition). Preferably the propylene-based interpolymer is a propylene/C4-C8 $\alpha$-olefin interpolymer or a propylene/ethylene interpolymer.

In another embodiment, a film outer is formed from a composition comprising greater than 90 weight percent, and preferably greater than 95 weight percent of two propylene-based interpolymers (based on the total weight of the composition). Preferably, each interpolymer is independently a propylene/C4-C8 $\alpha$-olefin interpolymer or a propylene/ethylene interpolymer.

In another embodiment, an inventive film comprises greater than 90 weight percent, and preferably greater than 95 weight percent of one ethylene-based interpolymer and one propylene-based interpolymer (based on the total weight of the film). Preferably, the propylene-based interpolymer is a propylene/C4-C8 $\alpha$-olefin interpolymer or a propylene/ethylene interpolymer. Preferably, the ethylene-based interpolymer is an ethylene/a-olefin interpolymer.

In another embodiment, an inventive film comprises greater than 90 weight percent, and preferably greater than 95 weight percent of one ethylene-based interpolymer and two propylene-based interpolymers (based on the total weight of the film). Preferably, each interpolymer is independently a propylene/C4-C8 $\alpha$-olefin interpolymer or a propylene/ethylene interpolymer. Preferably, the ethylene-based interpolymer is an ethylene/a-olefin interpolymer.

In another embodiment, an inventive film comprises greater than 90 weight percent, and preferably greater than 95 weight percent of one ethylene-based interpolymer and three propylene-based interpolymers (based on the total weight of the film). Preferably, each interpolymer is independently a propylene/C4-C8 $\alpha$-olefin interpolymer or a propylene/ethylene interpolymer. Preferably, the ethylene-based interpolymer, and preferably an ethylene/$\alpha$-olefin interpolymer.

In a preferred embodiment, the inventive films contain layers formed from only polyolefin-based polymers, as the predominant (greater than 50 weight percent) polymeric component, or as the sole polymeric component, in each layer of the film composition.

In another embodiment, the film composition does not contain an adhesive layer in addition to the inner layer and two outer layers.

In another embodiment, the film composition does not contain a layer formed from a composition comprising a carboxylic acid functionalized, ester functionalized or anhydride functionalized polymer. In a further embodiment, the film composition does not contain a layer formed from a composition comprising an ethylene vinyl acetate copolymer. In yet another embodiment, the film composition does not contain a layer formed from a composition comprising a hydrolyzed ethylene vinyl acetate copolymer.

In another embodiment, the film composition does not contain a layer formed from a composition comprising a halide functionalized polymer. In a further embodiment, the film composition does not contain a layer formed from a composition comprising a chloride functionalized polymer. In yet another embodiment, the film composition does not contain a layer formed from a composition comprising a polyvinyl chloride polymer or polyvinylidene chloride polymer.

In another embodiment, the film composition does not contain a layer formed from a composition comprising a polymer containing an aromatic moiety. In a further embodiment, the film composition does not contain a layer formed from a composition comprising an ethylene/styrene copolymer.

In another embodiment, the film composition does not contain a layer formed from a polyamide. In another embodiment, the film composition does not contain a layer formed from a polyester.

In another embodiment, the film composition does not contain a layer formed from a composition comprising a propylene homopolymer and/or an ethylene homopolymer.

In another embodiment, the film composition does not contain a layer formed from a composition comprising a propylene-based polymer with a melting point greater than 130°C, and more preferably, greater than, or equal to, 135°C, or greater than, or equal to, 137°C.

In another embodiment, the film composition does not contain a layer formed from a composition comprising two or more ethylene-based polymers.

In another embodiment, the film composition does not contain a layer formed from a composition comprising three or more propylene-based polymers.

In a certain embodiment, the film composition does not contain a layer formed from a composition comprising a propylene-based terpolymer and/or an ethylene-based terpolymer.

An inventive film may have a combination of two or more embodiments as described herein.

Each layer of an inventive film may have a combination of two or more embodiments as described herein.

Materials for Inner and Outer Layers

One or more ethylene-based interpolymers or propylene-based interpolymers may be used as the sole polymer component or as the major polymer component of a film layer (inner layer or outer layer).

The ethylene-based interpolymers include, but are not limited to, linear low density polyethylene (LLDPE), very low density polyethylene (VLDPE), homogeneously branched linear ethylene interpolymers, homogeneously branched substantially linear ethylene interpolymers, and heterogeneous linear ethylene interpolymers. Preferably the ethylene-based interpolymers include linear low density polyethylene (LLDPE).

Ethylene polymers suitable for practice of the invention include, but are not limited to, polymers such as those commercially available from The Dow Chemical Company under the trade designations DOWLEX™, ATTANE™, AFFINITY™ and ELITE™ polyethylenes; polymers commercially available from Exxon Chemical Corporation under the trade designations EXCEED™ and EXACT™; and polymers commercially available from Mitsui Petrochemical Industries under the trade designation TAFMER™.

In one embodiment, one ethylene-based interpolymer is preferably used as a sole polymeric component of a film layer, and more preferably as a sole polymeric component of an inner layer.

In a preferred embodiment, the inner layer of the film composition is formed from a composition comprising a linear low density polyethylene (LLDPE). In another embodiment, the inner layer is formed from a composition comprising a linear low density polyethylene (LLDPE) as the sole polymeric component. Linear low density ethylene/1-octene copolymers and linear low density ethylene/1-butene copolymers are especially preferred. Suitable polymers include DOWLEX™ polymers and FLEXOMER™ polymers (both from The DOW Chemical Company). In another embodiment, a linear low density ethylene/1-hexene copolymer is used.

In a preferred embodiment, the ethylene-based interpolymer is a heterogeneous linear ethylene interpolymer. Heterogeneous linear ethylene interpolymers include copolymers of ethylene and one or more $C_3$ to $C_8$ $\alpha$-olefins. Heterogeneous ethylene interpolymers can be prepared using Ziegler-Natta catalyst systems. Both the molecular weight distribution, and the short chain branching distribution, each arising from $\alpha$-olefin copolymerization, are relatively broad compared to homogeneous linear and homogeneous linear substantially linear ethylene interpolymers. Heterogeneous linear ethylene interpolymers can be made in a solution, slurry, or gas phase process using a Ziegler-Natta catalyst, and are well known to those skilled in the art. For example, see U.S. Patent No\ 4,339,507. Examples of suitable polymers include, but are not limited to, polyethylene-based polymers, such as, DOWLEX™ polymers and FLEXOMER™ polymers, as discussed above.

Heterogeneously branched ethylene/alpha-olefin interpolymers differ from the homogeneously branched ethylene/alpha-olefin interpolymers primarily in their branching distribution. For example, heterogeneously branched LLDPE polymers have a distribution of branching, including a highly branched portion (similar to a very low density polyethylene), a medium branched portion (similar to a medium branched polyethylene) and an essentially linear portion (similar to linear homopolymer polyethylene). Additional examples of manufacturing techniques for making the heterogeneously branched ethylene polymer are described in U.S. Patent No. 3,914,342 (Mitchell) and U.S. Patent No. 4,076,698 (Anderson et al).

Examples of catalyst suitable for preparing the heterogeneous interpolymers are described in U.S. Patent No. 4,314,912 (Lowery et al.), U.S. Patent No. 4,547,475 (Glass et al.), and U.S. Patent No. 4,612, 300 (Coleman, III). Examples of catalyst suitable for producing the homogeneous interpolyners are described in U.S. Patent Nos. 5,026,798 and 5,055, 438 (Canich); U.S. Patent No. 3,645,992 (Elston); U.S. Patent No. 5,017,714 (Welborn); and U.S. Patent No. 4,076,698 (Anderson).

The propylene-based interpolymers include propylene/a-olefin interpolymers. Preferably the propylene-based interpolymers include propylene/ethylene copolymers. Suitable polypropylene-based interpolymers include the VERSIFY™ polymers available from The Dow Chemical Company.

In one embodiment, the propylene-based interpolymer is used as a sole polymeric component of an inner layer, or as a sole polymeric component of an outer layer, or as a blend with another propylene-based interpolymer of an outer layer.

In another embodiment, the inner layer of the film composition is formed from a composition comprising a propylene/a-olefin copolymer. More preferably the inner layer is formed from a composition comprising a propylene/ethylene copolymer, and even more preferably the inner layer is formed from a composition comprising a propylene/ethylene copolymer as the sole polymeric component.

In a preferred embodiment, at least one outer layer, and preferably two outer layers, of the film composition is/are formed from a composition comprising a propylene/a-olefin copolymer. More preferably one or more outer layers are formed from a composition comprising a propylene/ethylene copolymer. Even more preferably one or more outer layers are formed from a composition comprising a propylene/ethylene copolymer as the sole polymeric component, or as a blend with another propylene/ethylene copolymer.

Suitable comonomers useful for polymerizing with the olefin (ethylene or propylene) include, but are not limited to, ethylenically unsaturated monomers, conjugated or nonconjugated dienes or polyenes. Examples of such comonomers include ethylene and the $C_3$-$C_{20}$ $\alpha$-olefins, such as propylene, isobutylene, 1-butene, 1-pentene, 1-hexene, 4-methyl-1-pentene, 1-heptene, 1-octene, 1-nonene, 1-decene. Preferred comonomers include ethylene, propylene, 1-butene, 1-hexene, 4-methyl-1-pentene and 1-octene, the latter of which is especially preferred.

Typically, ethylene is copolymerized with one $C_3$-$C_{20}$ $\alpha$-olefin. Preferred comonomers include $C_3$-$C_8$ $\alpha$-olefins, such as propylene, 1-butene, 1-pentene, 4-methyl-1-pentene, 1-hexene, 1-heptene, and 1-octene. More preferably, ethylene is polymerized with 1-butene, 1-hexene or 1-octene.

Typically, propylene is copolymerized with ethylene or one $C_4$-$C_{20}$ $\alpha$-olefin. Preferred comonomers include $C_4$-$C_8$ $\alpha$-olefins, such as 1-butene, 1-pentene, 4-methyl-1-pentene, 1-hexene, 1-heptene, and 1-octene. Preferably, propylene is polymerized with ethylene.

In one embodiment, an ethylene-based interpolymer, useful as a film layer or as a component of a film layer, has a comonomer content that comprises not greater than 20, preferably less than 15, more preferably less than 10, most preferably less than 7 weight percent, based on the weight of polymerizable monomers of said interpolymer. In another embodiment, ethylene-based interpolymer has a comonomer content from 3 to 15 weight percent. All individual weight percentages and subranges from 1 to 20 weight percent are included herein and disclosed herein.

In another embodiment, a propylene-based interpolymer, useful as a film layer or as a component of a film layer, has a comonomer content that comprises not greater than 20, preferably less than 15, more preferably less than 12, most preferably less than 10 weight percent, based on the weight of polymerizable monomers of said interpolymer. In another embodiment, ethylene-based interpolymer has a comonomer content from 3 to 15 weight percent. All individual weight percentages and subranges from 2 to 20 weight percent are included herein and disclosed herein.

Each interpolymer used to form an inner or outer layer of an inventive film has a balanced combination of melt flow and density. If the melt index or melt flow rate is too high or too low, the processibility of the final film in the film forming equipment will be impaired. If the density of an interpolymer is too low, the modulus of the final film will be impaired. A density that is too high will impair the "low temperature shrinkage" performance of the final film.

Inner Layer

Each of the interpolymers described below may be used in the formation of the inner layer, as the sole polymer component, or as a polymer blend component. In one embodiment, an interpolymer is used as the sole polymer component. The interpolymers may be characterized by two or more embodiments described herein.

In one embodiment, the polymer used in the inner layer is an ethylene-based interpolymer, characterized by a melt index (I2), at 190°C and 2.16 kg load (ASTM D-1238) greater than, or equal to, 0.5 g/10 min, preferably greater than, or equal to, 0.6 g/10 min, more preferably greater than, or equal to, 0.7 g/10 min, even more preferably greater than, or equal to, 0.8 g/10 min. In another embodiment, the polymer used in the inner layer is an ethylene-based interpolymer, characterized by a melt index (I2), at 190°C and 2.16 kg load (ASTM D-1238) less than, or equal to, 10 g/10 min, preferably less than, or equal to, 7 g/10 min, more preferably less than, or equal to, 5 g/10 min, even more preferably less than, or equal to, 3 g/10 min.

In another embodiment, the polymer used in the inner layer is an ethylene-based interpolymer, characterized by a melt index (12), at 190°C and 2.16 kg load (ASTM D-1238) from 0.5 to 10 g/10 min, preferably from 0.6 to 7 g/10 min, more preferably from 0.7 to 5 g/10 min, even more preferably from 0.7 to 3 g/10 min. In another embodiment, the melt index is from 0.5 g/10 min to 5 g/10 min. All individual values and subranges from 0.5 to 10 g/10 min are included herein and disclosed herein.

In another embodiment, the polymer used in the inner layer, is a propylene-based interpolymer, characterized by a melt flow rate (MFR), at 230°C and 2.16 kg load (ASTM D-1238) greater than, or equal to, 0.5 g/10 min, preferably greater than, or equal to, 0.7 g/10 min, more preferably greater than, or equal to, 1 g/10 min, even more preferably greater than, or equal to, 2 g/10 min. In another embodiment, the polymer used in the inner layer, is a propylene-based interpolymer, characterized by a melt flow rate (MFR), at 230°C and 2.16 kg load (ASTM D-1238) less than, or equal to, 10 g/10 min, preferably less than, or equal to, 8 g/10 min, more preferably less than, or equal to, 7 g/10 min, even more preferably less than, or equal to, 6 g/10 min.

In another embodiment, the polymer used in the inner layer, is a propylene-based interpolymer, characterized by a melt flow rate (MFR), at 230°C and 2.16 kg load (ASTM D-1238) from 0.5 to 10 g/10 min, preferably from 0.7 to 8 g/10 min, more preferably from 1 to 7 g/10 min, even more preferably from 2 to 6 g/10 min. In another embodiment, the melt index is from 0.5 g/10 min to 5 g/10 min. All individual values and subranges from 0.5 to 10 g/10 min are included herein and disclosed herein.

In another embodiment, the polymer used in the inner layer is an ethylene-based interpolymer, which has a density greater than, or equal to, 0.870 g/cm$^3$, preferably greater than, or equal to, 0.880 g/cm$^3$, and more preferably greater than, or equal to, 0.890 g/cm$^3$. In another embodiment, the polymer used in the inner layer is an ethylene-based interpolymer, which has a density less than, or equal to, 0.940 g/cm$^3$, preferably less than, or equal to, 0.930 g/cm$^3$, and more preferably less than, or equal to, 0.925 g/cm$^3$, or less than, or equal to, 0.920 g/cm$^3$.

In another embodiment, the polymer used in the inner layer is an ethylene-based interpolymer, which has a density from 0.870 g/cm$^3$ to 0.940 g/cm$^3$, and preferably from 0.870 g/cm$^3$ to 0.930 g/cm$^3$, and more preferably from 0.890 g/cm$^3$ to 0.925 g/cm$^3$. All individual values and subranges from 0.870 g/cm$^3$ to 0.940 g/cm$^3$ are included herein and disclosed herein.

In another embodiment, the ethylene-based interpolymer has a molecular weight distribution greater than 2, preferably greater than 2.5, and more preferably greater than 3. In another embodiment, the ethylene-based interpolymer has a molecular weight distribution less than 10, preferably less than 7, and more preferably greater than 5.

In another embodiment, the polymer used in the inner layer is a propylene-based interpolymer, which has a density greater than, or equal to, 0.830 g/cm$^3$, and preferably greater than, or equal to, 0.840 g/cm$^3$, and more preferably greater than, or equal to, 0.850 g/cm$^3$. In another embodiment, the polymer used in the inner layer is a propylene-based interpolymer, which has a density less than, or equal to, 0.890 g/cm$^3$, or less than, or equal to, 0.885 g/cm$^3$.

In another embodiment, the polymer used in the inner layer is a propylene-based interpolymer, which has a density from 0.830 g/cm$^3$ to 0.900 g/cm$^3$, and preferably from 0.840 g/cm$^3$ to 0.895 g/cm$^3$, and more preferably from 0.850 g/cm$^3$ to 0.890 g/cm$^3$. All individual values and subranges from 0.830 g/cm$^3$ to 0.900 g/cm$^3$ are included herein and disclosed herein.

In another embodiment, the interpolymer used in the inner layer, as a single component or as a blend component, will typically have a total percent crystallinity of less than 60 percent, and preferably less than 50 percent, and more preferably less than 40 percent, as measured by DSC. In another embodiment, the interpolymer has a total percent crystallinity from 20 to 40 weight percent, as measured by DSC.

In another embodiment, the polymer used in the inner layer is an ethylene-based interpolymer, which has a melting temperature ($T_m$) from 110°C to 130°C, and preferably from 112°C to 125°C, as measured by DSC. All individual values and subranges from 110°C to 130°C are included herein and disclosed herein.

In another embodiment, the polymer used in the inner layer is a propylene-based interpolymer, which has a melting temperature ($T_m$) from 50°C to 120°C, and preferably from 60°C to 100°C, as measured by DSC. All individual values and subranges from 50°C to 120°C are included herein and disclosed herein.

In another embodiment, the polymer used in the inner layer has a molecular weight distribution, $M_w/M_n$, from 1.1 to 20, preferably from 1.5 to 10, and more preferably from 2 to 5. All individual values and subranges from 1.1 to 20 are included herein and disclosed herein.

In another embodiment, the polymer used in the inner layer is an ethylene-based interpolymer or a propylene-based interpolymer, and each will typically be present in an amount from 80 weight percent to 100 weight percent, preferably from 85 weight percent to 100 weight percent based, and more preferably 90 weight percent to 100 weight percent, based on the total weight of the components of the composition used to form the inner layer. All individual values and subranges from 80 weight percent to 100 weight percent are included herein and disclosed herein.

In another embodiment, a composition comprising an ethylene-based interpolymer and a propylene-based interpolymer is used to form the inner layer, and each interpolymer will typically be present in an amount of 50 weight percent, based on the total sum weight of the ethylene-based interpolymer and the propylene-based interpolymer. In another embodiment, the ethylene-based interpolymer is present in an amount less than 50 weight percent, and preferably less than 40 weight percent; and the propylene-based interpolymer is present in an amount greater than 50 weight percent, preferably greater than 60 weight percent. Again, each weight percent based on the total sum weight of the ethylene-based interpolymer and the propylene-based interpolymer.

An ethylene-based interpolymer used in the inner layer may have a combination of two or more embodiments disclosed herein. Preferably the ethylene-based interpolymer is an ethylene/a-olefin interpolymer, and more preferably an ethylene/C4-C8 $\alpha$-olefin interpolymer.

A propylene-based interpolymer used in the inner layer may have a combination of two or more embodiments disclosed herein. Preferably the propylene-based interpolymer is a propylene/C4-C8 $\alpha$-olefin interpolymer or a propylene/ethylene interpolymer.

Outer Layer

Each of the propylene-based interpolymers described below, may be used in the formation of an outer layer, as the sole polymer component, or as a polymer blend component. In one embodiment, the propylene-based interpolymer is used as a sole polymer component. In another embodiment, the propylene-based interpolymer is used as a blend component with another propylene-based interpolymer, and these two propylene-based interpolymers are the only polymeric components of the blend. The interpolymers may be characterized by two or more embodiments described herein. In a preferred embodiment, the propylene-based interpolymer is a propylene/C4-C8 $\alpha$-olefin interpolymer or a propylene/ethylene interpolymer.

In one embodiment, the propylene-based interpolymer used in the outer layer, is characterized by a melt flow rate (MFR), at 230°C and 2.16 kg load (ASTM D-1238), greater than, or equal to, 0.5 g/10 min, preferably greater than, or equal to, 1 g/10 min, more preferably greater than, or equal to, 2 g/10 min. In another embodiment, the propylene-based interpolymer used in the outer layer, is characterized by a melt flow rate (MFR), at 230°C and 2.16 kg load (ASTM D-1238), less than, or equal to, 20 g/10 min, preferably less than, or equal to, 15 g/10 min, more preferably less than, or equal to, 10 g/10 min. In another embodiment, a blend of two propylene-based interpolymers will typically be characterized by a melt flow rate (MFR), at 230°C and 2.16 kg load (ASTM D-1238), greater than, or equal to, 0.5 g/10 min, preferably greater than, or equal to, 1 g/10 min, more preferably greater than, or equal to, 2 g/10 min. In another embodiment, a blend of two propylene-based interpolymers will typically be characterized by a melt flow rate (MFR), at 230°C and 2.16 kg load (ASTM D-1238), less than, or equal to, 20 g/10 min, preferably less than, or equal to, 15 g/10 min, more preferably less than, or equal to, 10 g/10 min.

In another embodiment, the propylene-based interpolymer used in the outer layer, s characterized by a melt flow rate (MFR), at 230°C and 2.16 kg load (ASTM D-1238), from 0.5 to 20 g/10 min, preferably from 1 to 15 g/10 min, more preferably from 1 to 10 g/10 min, and even more preferably from 2 to 10 g/10 min. All individual values and subranges from 0.5 to 20 g/10 min are included herein and disclosed herein. In another embodiment, a blend of two propylene-based interpolymers will typically be characterized by a melt flow rate (MFR), at 230°C and 2.16 kg load (ASTM D-1238), from 0.5 to 20 g/10 min, preferably from 1 to 15 g/10 min, more preferably from 1 to 10 g/10 min, and even more preferably from 2 to 10 g/10 min. All individual values and subranges from 0.5 to 20 g/10 min are included herein and disclosed herein.

In another embodiment, the propylene-based interpolymer used in the outer layer, has a total percent crystallinity less than 60 percent, and preferably less than 50 percent, and more preferably less than 40 percent as measured by DSC. In another embodiment, the propylene-based interpolymer has a total percent crystallinity from 35 to 50 weight percent, as measured by DSC.

In another embodiment, the propylene-based interpolymer used in the outer layer will typically have a density greater than, or equal to, 0.860 g/cm$^3$, preferably greater than, or equal to, 0.870 g/cm$^3$, and more preferably greater than, or equal to, 0.875 g/cm$^3$. In another embodiment, the propylene-based interpolymer used in the outer layer will typically have a density less than 0.910 g/cm$^3$, preferably less than, or equal to, 0.900 g/cm$^3$, and more preferably greater than, or equal to, 0.890 g/cm$^3$.

In another embodiment, the propylene-based interpolymer used in the outer layer will typically have a density from 0.860 g/cm$^3$ to 0.910 g/cm$^3$, and preferably from 0.870 g/cm$^3$ to 0.890 g/cm$^3$, or 0.880 g/cm$^3$ to 0.890 g/cm$^3$. All individual values and subranges from 0.860 g/cm$^3$ to 0.900 g/cm$^3$ are included herein and disclosed herein.

In another embodiment, the propylene-based interpolymer used in the outer layer has a melting temperature ($T_m$) from 100°C to 140°C, and preferably from 110°C to 135°C, and more preferably from 110°C to 130°C, as measured by DSC. All individual values and subranges from 100°C to 140°C are included herein and disclosed herein.

In another embodiment, the propylene-based interpolymer used in the outer layer has a molecular weight distribution, $M_w/M_n$, from 1 to 20, preferably from 1 to 10, and more preferably from 1 to 5. All individual values and subranges from 1 to 20 are included herein and disclosed herein.

In one embodiment, propylene-based interpolymer used in the outer layer will typically be present in an amount from 50 weight percent to 100 weight percent, based on the total weight of the components of the outer layer. All individual values and subranges from 50 weight percent to 100 weight percent are included herein and disclosed herein.

In another embodiment, two propylene-based interpolymers used in the outer layer will typically be present in an amount from 80 weight percent to 100 weight percent, preferably 90 weight percent to 100 weight percent, and more preferably 95 weight percent to 100 weight percent, based on the total weight of the components of the outer layer. All individual values and subranges from 50 weight percent to 100 weight percent are included herein and disclosed herein.

The propylene-based interpolymer used in the outer layer may have a combination of two or more properties of the above embodiments. Preferably, the propylene-based interpolymer is a propylene/C4-C8 $\alpha$-olefin interpolymer or a propylene/ethylene interpolymer.

In a preferred embodiment, the same composition (polymer or resin) formulation is used to form at least two outer layers. More preferably, the two outer layers are formed from two propylene-based interpolymers. In a further embodiment, the two propylene-based interpolymers are present in a 70/30 weight ratio, more preferably a 60/40 weight ratio, and even more preferably a 50/50 weight ratio.

In another embodiment, an ethylene-based interpolymer is used as the sole polymeric component in one or more outer layers. In another embodiment, an ethylene-based interpolymer is used as in polymeric blend in one or more outer layers. In a further embodiment, the ethylene-based interpolymer is a linear low density ethylene/$\alpha$-olefin copolymer.

Additives

Stabilizer and antioxidants may be added to a resin formulation to protect the resin from degradation, caused by reactions with oxygen, which are induced by such things as heat, light or residual catalyst from the raw materials. Suitable antioxidants are commercially available from Ciba-Geigy, and include Irganox® 565, 1010 and 1076, which are hindered phenolic antioxidants. These primary antioxidants act as free radical scavengers, and may be used alone, or in combination with, other antioxidants, such as phosphite antioxidants, like Irgafos® 168, available from Ciba-Geigy. Phosphite antioxidants are considered secondary antioxidants, and are not generally used alone. Phosphite antioxidants serve primarily as peroxide decomposers. Other available antioxidants include, but are not limited to, Cyanox® LTDP, available from Cytec Industries in Stamford, Conn., and Ethanox® 1330, available from Albemarle Corp., in Baton Rouge, Louisiana. Many other antioxidants are available for use by themselves, or in combination with other such antioxidants.

Other resin additives include ultraviolet light absorbers, antistatic agents, pigments, dyes, nucleating agents, fillers slip agents, fire retardants, plasticizers, processing aids, lubricants, stabilizers, smoke inhibitors, viscosity control agents and anti-blocking agents, antistatic agents, release agents, blowing agents, flame resistant agents, abrasion and scratch mar additives, and antimicrobial agents.

Additives may also be used to modify COF (Coefficient of Friction), to afford antifogging characteristics, to pigment the film, and to alter film permeability. The film may be surface treated for printing. In a preferred embodiment, the film compositions do not contain an adhesive and/or a release agent.

In certain embodiments, the propylene-based interpolymers may be blended with other materials to modify the sealant layer properties. Examples include other polymers, such as PP or RCP PP resins (to modify cost), polyethylene resins (for example, LDPE for improved bubble stability or LLDPE for improved impact strength), polybutene (PB), and ethylene vinyl acetate (EVA). In other embodiments, the propylene-based interpolymers may also be blended into the inner or core layer to further soften the film, and to improve low temperature shrink and reduce shrink tension. Propylene-based interpolymers can also be added to one or more layers in a blend to improve the softness, bubble stability and shrink performance of the film.

Preparation of Film Composition

A film composition of the invention can be prepared by selecting the polymers suitable for making each layer, forming a film of each layer, and bonding the layers, or coextruding or casting one or more layers. Desirably, the film layers are bonded continuously over the interfacial area between film layers.

In one embodiment, the polymers used to form each film layer are used either in neat form, or in a slip/antiblock modified formulation, and processed via a coextrusion line to produce a narrow primary tape. The tape is quenched in a water bath, containing refrigerated water (around 18°C to 20°C), and then the primary tape is reheated via heating elements. The heated primary tape is then blown into a second bubble to further orient the film. Orientations ratios vary, depending on the application and process, but typical values are 5 to 6 times in the machine direction (MD) and 5 to 6 times in the traverse direction (TD). Annealing is frequently conducted after the orientation process to adjust shrinkage rates and to improve the dimensional stability of the film.

Orientation can occur in-line (for example, where the resin is processed via an extruder(s), and the primary tape is water quenched, and then immediately reheated to form a second bubble), or off-line (for example, where the tape is extruded, quenched and collected and oriented in a separate processing step). The propylene-based interpolymers can be used in neat form or in blends, in either the skin layer(s) or the core layer, depending on the balance of properties required. The inventive film may be used in existing forms. The films can also be printed and used for packaging purposes. In certain embodiments the films may be laminated to other substrates to produce laminates with specific property requirements (for example, a PET//BOPE for temperature resistance/differential and modulus, or a PA//BOPE for impact strength and barrier, or a PET//PA//BOPE or a BOPP//BOPE, or SiOx coated films). In certain embodiments, the films may also be metallised to improve the O2TR and water vapor barrier. In other embodiments, the films may also be coextruded with barrier materials such as SARAN barrier resins or polyamides or EVOH resins.

For each layer, typically, it is suitable to extrusion blend the components and any additional additives, such as stabilizers and polymer processing aids. The extrusion blending should be carried out in a manner, such that an adequate degree of dispersion is achieved. The parameters of extrusion blending will necessarily vary, depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, bubble extrusion, biaxial orientation processes (such as tenter frames or double bubble processes), cast/sheet extrusion, coextrusion and lamination. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention.

Other film manufacturing techniques are disclosed in U.S. 6,723,398 (Chum et al.). Post processing techniques, such as radiation treatment and corona treatment, especially for printing applications, can also be accomplished with the materials of the invention.

After the film composition, has been formed, it can be stretched. The stretching can be accomplished in any manner, conventionally used in the art. Film compositions can be sent to a converter for bag manufacturing. Sheets of the film composition can be bonded by heat sealing or by use of an adhesive. Heat sealing can be effected using conventional techniques, including, but not limited to, a hot bar, impulse heating, side welding, ultrasonic welding, or other alternative heating mechanisms, as discussed above.

The film compositions of the aforementioned processes may be made to any thickness depending upon the application. Typically the film compositions have a total thickness of from 5 to 100 $\mu$m (microns) preferably from 10 to 60 $\mu$m (microns), more preferably from, 8 to 30 $\mu$m (microns). The permeability may also be adjusted depending upon the application.

In one embodiment, the film composition contains an inner or core layer that comprises from 50 to 80 percent, preferably from 60 to 75 percent, and more preferably from 70 to 75 percent of the total thickness of the film.

In another embodiment the film composition contains an outer layer that comprises from 10 to 25 percent, preferably from 10 to 20 percent, and more preferably from 12.5 to 15 percent of the total thickness of the film.

In another embodiment, the film composition contains three layers, one inner layer and two outer layers. In a further embodiment, the two outer layers are formed from the same polymer composition, and thus, the film has an "A/B/A" structure. In another embodiment, the percent thickness of each film layer in the "A/B/A" structure is 25:50:25, more preferably 20:60:20, and more preferably 15:70:15, or 12.5:75:12.5. In another embodiment, the percent thickness of each film layer in the "A/B/A" structure is 10:80:10.

In another embodiment, the film composition comprises an inner or core formed from a Composition A, comprising an ethylene/$\alpha$-olefin interpolymer; and two outer layers formed from the same Composition B, comprising a propylene/a-olefin interpolymer; and wherein the ratio of the "melt index, I2, of the Composition A" to the "melt index, I2, of the Composition B" is from 1/2 to 1/10, preferably from 1/2 to 1/8, and more preferably from 1/2 to 1/4; and wherein the density differential [$\rho$(EE) - $\rho$(PP)] of the ethylene/$\alpha$-olefin interpolymer ($\rho$(EE)) and the propylene/$\alpha$-olefin interpol-

ymer (ρ(PP)) is from 0.020 to 0.050, and preferably from 0.030 to 0.040. In a further embodiment, the ethylene/α-olefin interpolymer is an ethylene/1-octene copolymer or an ethylene/1-butene copolymer, and preferably a an ethylene/1-octene copolymer; and the propylene/a-olefin interpolymer is a propylene/ethylene copolymer. In yet a further embodiment, the ethylene/a-olefin interpolymer is the sole polymeric component of the inner layer. In another further embodiment, the film composition comprises only the inner layer formed from Composition A, and two outer layers, each formed from Composition B.

In another embodiment, the film composition comprises an inner or core formed from a Composition C, comprising a first propylene/a-olefin interpolymer; and two outer layers formed from the same Composition D, comprising a second propylene/α-olefin interpolymer; and wherein the ratio of the "melt flow ratio, MFR, of the Composition C" to the "melt flow ratio, MFR, of the Composition D" is from 1/1 to 1/5, and more preferably from 1/1 to 1/4; and wherein the density differential [ρ(PP2) - ρ(PP1)] of the second propylene/α-olefin interpolymer (ρ(PP2)) and the first propylene/a-olefin interpolymer (ρ(PP1)) is from 0.010 to 0.040, and preferably from 0.010 to 0.030. In a further embodiment, the propylene/a-olefin interpolymer of the inner layer is a propylene/ethylene copolymer. In a further embodiment, the propylene/ethylene copolymer is the sole polymeric component of Composition C. In yet a further embodiment, the propylene/a-olefin interpolymer of the outer layer is a propylene/ethylene copolymer. In another further embodiment, the film composition comprises only the inner layer formed from Composition C, and two outer layers, each formed from Composition D.

In another embodiment, the film composition comprises an inner or core formed from a Composition E, comprising an ethylene/α-olefin interpolymer; and two outer layers formed from the same Composition F, comprising two propylene/a-olefin interpolymers; and wherein the ethylene/a-olefin interpolymer has a density from 0.875 to 0.930 g/cc, preferably from 0.890 to 0.925 g/cc, and a melt index from 0.7 to 1.2 g/10 min; and wherein the first propylene/α-olefin interpolymer has a density from 0.880 g/cc to 0.900 g/cc, and a melt flow rate, MFR, from 1.8 to 2.2 g/10 min; and wherein the second propylene/a-olefin interpolymer has a density from 0.880 g/cc to 0.900 g/cc, and a melt flow rate, MFR, from 7.5 to 8.8 g/10 min. In a further embodiment, the ethylene/α-olefin interpolymer is an ethylene/1-octene copolymer or an ethylene/1-butene copolymer, and preferably an ethylene/1-octene copolymer. In a further embodiment, the first and second propylene/α-olefin interpolymers are each a propylene/ethylene copolymer. In yet a further embodiment, the ethylene/α-olefin interpolymer is the sole polymeric component of the inner layer. In yet a further embodiment, the first propylene/α-olefin interpolymer and the second propylene/a-olefin interpolymer are the only polymeric components of each outer layer. In another embodiment, the film composition comprises only the inner layer formed from Composition E, and two outer layers, each formed from Composition F. The film may contain two or more embodiments as disclosed herein.

In another embodiment, the film composition comprises an inner or core formed from a Composition G, comprising a ethylene/a-olefin interpolymer; and two outer layers formed from the same Composition H, comprising a propylene/α-olefin interpolymer, and wherein the ethylene/a-olefin interpolymer has a density from 0.860 to 0.890, and a melt index from 0.7 to 1.0 g/10 min; and wherein the propylene/α-olefin interpolymer has a density from 0.865 g/cc to 0.885 g/cc, and a melt flow rate, MFR, from 1.8 to 2.2 g/10 min. In a further embodiment, the ethylene/α-olefin interpolymer is an ethylene/1-octene copolymer or an ethylene/1-butene copolymer, and preferably an ethylene/1-butene copolymer. In a further embodiment, the propylene/a-olefin interpolymer a propylene/ethylene copolymer. In yet a further embodiment, the ethylene/a-olefin interpolymer is the sole polymeric component of the inner layer. In yet a further embodiment, the propylene/α-olefin interpolymer is the sole polymeric component of each outer layer. In another further embodiment, the film composition comprises only the inner layer formed from Composition G, and two outer layers, each formed from Composition H. The film may contain two or more embodiments as disclosed herein.

In another embodiment, the film composition comprises an inner or core formed from a Composition I, comprising a first propylene/α-olefin interpolymer, and two outer layers formed from the same Composition J, comprising a second propylene/α-olefin interpolymer and a third propylene/α-olefin interpolymer, and wherein the first propylene/α-olefin interpolymer has a density from 0.850 to 0.880, and a melt flow rate from 1.8 to 2.2 g/10 min; and wherein the second propylene/a-olefin interpolymer has a density from 0.880 g/cc to 0.900 g/cc, and a melt flow rate, I2, from 1.8 to 2.2 g/10 min; and wherein the third propylene/a-olefin interpolymer has a density from 0.880 g/cc to 0.900 g/cc, and a melt flow rate, I2, from 7.5 to 8.8 g/10 min. In a further embodiment, the first propylene/α-olefin interpolymer is a propylene/ethylene copolymer. In yet a further embodiment, the second and third propylene/a-olefin interpolymers are each a propylene/ethylene copolymer. In yet another embodiment, the first propylene/a-olefin interpolymer is the sole polymeric component of the inner layer. In yet a further embodiment, the second propylene/α-olefin interpolymer and the third propylene/α-olefin interpolymer are the only polymeric components of each outer layer. In another further embodiment, the film composition comprises only the inner layer formed from Composition I, and two outer layers, each formed from Composition J. The film may contain two or more embodiments as disclosed herein.

In another embodiment, the film composition comprise an inner or core layer formed from a Composition K, comprising a first propylene/ethylene interpolymer and an ethylene/α-olefin interpolymer; and two outer layers formed from the same Composition L, comprising a second propylene/ethylene interpolymer and a third propylene/ethylene interpolymer; and wherein the first propylene/ethylene interpolymer has a density from 0.860 to 0.890 g/cc, and a melt flow rate from 1 to 3 g/10 min; and wherein the second propylene/ethylene interpolymer has a density from 0.870 to 0.900 g/cc, and a melt flow rate from 1 to 3 g/10 min; and wherein the third propylene/ethylene interpolymer has a density from 0.890 to 0.910 g/cc, and a melt flow rate from 4 to 7 g/10 min. In a further embodiment, the ethylene/$\alpha$-olefin interpolymer has a density from 0.910 to 0.930 g/cc, and a melt index from 0.7 to 2 g/10 min. In a further embodiment, the first propylene/ethylene interpolymer and the ethylene/a-olefin interpolymer are the only polymeric components of the inner layer. In another embodiment, the second propylene/ethylene interpolymer and the third propylene/ethylene interpolymer are the only polymeric components of each outer layer. In another further embodiment, the film composition comprises only the inner layer formed from Composition K, and two outer layers, each formed from Composition L. In another embodiment, the $\alpha$-olefin of the ethylene/$\alpha$-olefin interpolymer is 1-butene, 1-hexene or 1-octene, and preferably 1-butene or 1-hexene. In another embodiment, the third propylene/ethylene interpolymer is a propylene/ethylene/butene interpolymer. The film may contain two or more embodiments as disclosed herein.

In another embodiment neat propylene/ethylene copolymers or blends (50%:50%) of two propylene/ethylene copolymers (PP-EE) are used in a sealant layers of coextruded films to produce various film structures, containing ethylene/1-octene (EO) or ethylene/1-butene (EB) core layers, such as (PP-EE)/(EO)/(PP-EE) and (PP-EE)/(EB)/(PP-EE). Propylene/ethylene copolymers with a melt index from 4 to 6 g/10 min can be used either in skin or core layer (to avoid stickiness) for reduced HSIT, and also for lower shrink temperatures and shrink tension films. Layer ratios used in the three layer films are 10:80:10%, although alternative layer ratios (for example, 20:60:20 or 25:50:25) can be used to adjust film properties. While neat layers of propylene/ethylene copolymers in coextruded films can be used, another option is to blend the propylene/ethylene copolymer with other materials.

DEFINITIONS

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component, melting temperature, melt index, is between 1 and 100, it is intended that all individual values, such as, 1, 2, 3, ., and all subranges, such as, 1 to 20, 55 to 70, 197 to 100, ., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to film thickness, melt index, density, percent crystallinity, weight percent of a component, and other properties.

The term "film composition," as used herein, means a layered film structure. The term "film composition" is equivalent to the term "film," when the term "film" is in reference to a layered film structure.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "ethylene-based interpolymer," as used herein, refers to an interpolymer that comprises greater than 50 mole percent polymerized ethylene monomers (based on total moles polymerizable monomers).

The term, "propylene-based interpolymer," as used herein, refers to an interpolymer that comprises greater than 50 mole percent polymerized propylene monomers (based on total moles of polymerizable monomers).

The term, "ethylene/$\alpha$-olefin interpolymer," as used herein, refers to an interpolymer that comprises more than 50 mole percent polymerized ethylene monomer (based on the total amount of polymerizable monomers), and at least one $\alpha$-olefin.

The term, "propylene/$\alpha$-olefin interpolymer," as used herein, refers to an interpolymer that comprises more than 50 mole percent polymerized propylene monomer (based on the total amount of polymerizable monomers), and at least one $\alpha$-olefin. The term "$\alpha$-olefin," as used herein, includes ethylene and higher carbon number $\alpha$-olefins, such as, for example, propylene, 1-butene, 1-pentene, 1-hexene, and other $\alpha$-olefins.

The term, "propylene/ethylene interpolymer," as used herein, refers to an interpolymer that comprises more than 50 mole percent polymerized propylene monomer (based on the total amount of polymerizable monomers), ethylene monomer.

The term "polymeric component," as used herein, refers to a polymer formed from organic monomer constituents as known in the art.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art. The term "blend" also includes post-reactor (or physical) blends, and in-situ reactor blends. Examples of post-reactor blends, include, but are not limited to, blends formed by blending polymer components, and optional additives, in an extruder, or blends formed by an off-line tumble blending operation. Some examples of the manufacture of in-situ blends are described in U.S. Patent Nos. 5,844,045 and 5,869,575.

TEST PROCEDURES

The densities of the ethylene-based polymers and the propylene-based polymers are measured in accordance with ASTM D-792-00.

Melt index ($I_2$) of an ethylene-based polymer is measured in accordance with ASTM D-1238-04, condition 190°C/2.16 kg. The melt flow rate (MFR) of an propylene-based polymer is measured in accordance with ASTM D-1238-04, condition 230°C/2.16 kg.

Differential Scanning Calorimetry

Percent crystallinity for ethylene-based polymers and propylene-based polymers can be determined by Differential Scanning Calorimetry (DSC) using a TA Instruments Model Q1000 Differential Scanning Calorimeter. A sample from 5 to 8 mg size is taken from the material to be tested, and placed directly in the DSC pan for analysis. The sample is first heated at a rate of about 10°C/min to 180°C for ethylene-based polymers (230°C for propylene-based polymers), and held isothermally for three minutes at that temperature, to ensure complete melting (the first heat). Then the sample is cooled at a rate of 10°C per minute to -60°C for ethylene-based polymers (-40°C for propylene-based polymers), and held there isothermally for three minutes, after which, it is again heated (the second heat) at a rate of 10°C per minute, until complete melting. The thermogram from this second heat is referred to as the "second heat curve." Thermograms are plotted as watts/gram versus temperature.

The percent crystallinity in the polymers may be calculated using heat of fusion data, generated in the second heat curve (the heat of fusion is normally computed automatically by typical commercial DSC equipment, by integration of the relevant area under the heat curve). The equation for ethylene-based samples is:

$$\% \ \text{Cryst.} = (H_f \div 292 \ \text{J/g}) \ \text{x} \ 100.$$

The equation for propylene-based samples is: % Cryst. = ($H_f \div$ 165 J/g) x 100. The "% Cryst." represents the percent crystallinity and "$H_f$" represents the heat of fusion of the polymer in Joules per gram (J/g).

The melting point(s) ($T_m$) of the polymers can be determined from the second heat curve obtained from DSC, as described above. The crystallization temperature ($T_c$) can be determined from the first cooling curve.

Shrinkage - MD and TD.

Shrinkage was determined as follows: Percent Shrinkage (MD) = (L1-L2)/L1 x 100. Here, L1 is the sample length prior to thermal treatment, and L2 is the film sample length after 10 minutes in an oven equilibrated at a specified temperature (for example, 80°C, 90°C, 100°C, 110°C, etc.). The sample size was 5cm x 5cm, prior to the thermal treatment (L1 = 5 cm). The MD and the TD were marked on each film specimen.

Seal Strength

Seal strength was measured on a sample of a film, using the following conditions: dwell time of 0.5 sec, seal bar pressure of 0.275N/mm$^2$, sample width of 25 mm, test speed of 500 mm/min. This test was performed on a Topwave Tester (Model No. 4000). A sample of the film was cut into 25 mm width strips, and two film samples were sealed, face to face,' using a pressure of 0.275 N/mm, and a dwell time of 0.5 sec, at a specified temperature (for example, 80°C, 90°C, 100°C, 110°C, etc.). After 24 hours at room temperature, the sealed films were pulled at 500 mm/min speed. The maximum breaking force was recorded as the seal strength at corresponding seal temperature. Samples were sealed at temperatures ranging from 80 °C to 130°C, using 5°C increments.

Heat Seal Initiation Temperature

Heat Seal Initial temperature (HSIT) is the temperature noted, when the seal strength of a film reaches 0.45 kg (one pound (11b)) per 25 mm (1.8N/cm) using the above seal strength method.

Ultimate Tensile Strength, Ultimate Tensile Elongation and Scant Modulus (MD and TD) were measured in accordance with ASTM D882-01. The film (25 mm (width) x 60 mm (length)) was placed in the grips of the testing machine, and the grips were then moved at a speed of 500mm/min. The maximum force, before breakage of the strip, was recorded. The ultimate tensile strength was calculated by dividing the maximum load force by the original cross-section area of the specimen. Ultimate tensile elongation was calculated by dividing the sample extension, at the moment of break, by the initial length of the specimen, and multiplying by 100. Scant modulus, at designated strain (1% or 2% in this art), was calculated by dividing the correspondence stress by the designated strain.

Optical Properties - Haze (the percentage of the light scattered upon passing through a film) was measured in accordance with ASTM D1003-00.

Elmendorf Tear - MD and TD was measured in accordance with ASTM D1922-00A. The force required to propagate tear across the film specimen was measured. The measurement was made in a calibrated pendulum device (the pendulum, acting by gravity, from an initial height, swings through an arc, tearing the specimen from a precut slit). A calibrated scale provided an indication of the force required to tear the specimen (height of pendulum before release: 102.7 $\pm$ 0.05 mm at an angle of 27.5 deg.).

**[0214]** - Dart Drop Impact was measured in accordance with ASTM D1709-01. The dart impact data is the weight of a falling dart from a specified height, which results in 50% failure of the specimens tested.

The films and processes of this invention, and their uses, are more fully described by the following examples.

EXPERIMENTAL

Materials

The polymeric resins used in this study are shown in Table 1. All of the resins listed, contained one or more processing additives and one or more stablizers.

Table 1 - Polymeric Resins

| Resin | Base Monomer | Density (g/cc) | I2 (g/10 min) | I10 (g/10 min) | Polymerization/ Catalyst | *Comonomer* |
|---|---|---|---|---|---|---|
| D45 | Ethylene | 0.920 | 1 | 8 | Solution/Z-N | 1-Octene |
| D56 | Ethylene | 0.920 | 1 | 8 | Solution/Z-N | 1-Octene |
| D85 | Ethylene | 0.884 | 0.85 | | Gas/Z-N | 1-Butene |
| PP20 | Propylene | 0.888 | 2 | | Solution | Ethylene |
| PP30 | Propylene | 0.888 | 8 | | Solution | Ethylene |
| PP22 | Propylene | 0.876 | 2 | | Solution | Ethylene |
| PP24 | Propylene | 0.859 | 2 | | Solution | Ethylene |
| ADSYL™ 5C37 | Propylene | 0.90 | 5.5 | | - | Ethylene Butene |
| *Z-N = Ziegler-Natta I2 (PE: 190°C/2.16 Kg; PP: 230°C/2.16 Kg (MFR)) I10 (PE: 190°C/10 Kg; PP: 230°C/10 Kg (MFR)) | | | | | | |

Example 1

A three layer biaxially oriented film based on propylene/ethylene copolymers and an ethylene/octene copolymer was produced using a modified Prandi design orientation line. The resins were processed on single screw extruders, using standard extruder temperatures (190/200/210/210 extruder, 220 adaptor, 220 die), to produce a three layer primary tape having layer ratios of 15%:70%:15%; each percentage is based on the total thickness of the film. The tape was fed through a water bath, at 25°C, to quench the material. The solid tape was fed through radiant heaters, set at 100°C to 105°C, which reheated the primary tape. The softened tape was reblown into a bubble to further orient the film. The orientation ratio was 5 to 6 times in the machine direction (MD) and 5 to 6 times in the traverse direction (TD).

This process was used to produce the following film structures:

A) (50 wt% PP20 + 50 wt% PP30)/(D45)/(50 wt% PP20 + 50 wt% P30) - Inventive; and
B) (ADSYL™ 5C37)/(D45)/(ADSYL™ 5C37) - Comparative.

The films were produced at 20 μm gauge, and were compared for mechanical, optical and sealing properties, as shown below in Table 2. The layered ratios were 15:70:15.

Table 2: Film Properties

| Test Name | Result | Unit | ADSYL5C37/D45/ADS YL 5C37 | (PP20 + PP30)/(D45)/(PP20 +PP30) | PP20 + PP30)/(D45)/(PP20 + PP30) with different antiblock additive |
|---|---|---|---|---|---|
| | Average Thickness | μm | 18 | 19 | 20 |
| Dart Drop Impact - Type A | Dart Impact (failure weight) | g | 220 | 261 | 360 |
| Elmendorf Tear-TD | Elmendorf TD | N | 0.1 | 0.1 | 0.1 |
| Elmendorf Tear - MD | Elmendorf MD | N | 0.08 | 0.15 | 0.08 |
| Haze | Haze | % | 6.41 | 7.79 | 2.81 |
| Modulus - MD | 1% Secant Modulus | MPa | 658 | 463 | 434 |
| | 2% Secant Modulus | MPa | 502 | 361 | 337 |
| | Young Modulus | MPa | 491 | 322 | 303 |
| Modulus - TD | 1% Secant Modulus | MPa | 812 | 529 | 551 |
| | 2% Secant Modulus | MPa | 625 | 415 | 438 |
| | Young Modulus | MPa | 631 | 375 | 416 |
| Puncture Properties | Elongation at Peak Load | mm | 28.6 | 32.2 | |
| | Peak Load | N | 62.6 | 65.4 | 75 |
| | Puncture Resistance | mm | 28.6 | 32.2 | 35 |
| | Total Energy | J | 0.69 | 0.85 | 1.04 |
| Tensile Properties TD | Ultimate Tensile | MPa | 117.8 | 111.4 | 122 |
| | Elongation | % | 83 | 159 | 142 |
| Tensile Properties MD | Ultimate Tensile | MPa | 103.2 | 128 | 108 |
| | Elongation | % | 94 | 141 | 153 |

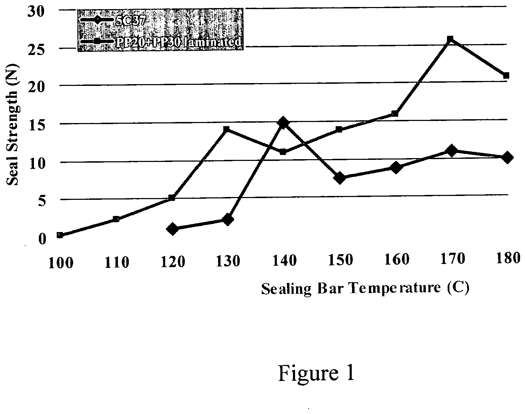

The propylene/ethylene copolymer film afforded better tensile elongation properties compared with the ADSYL™ based analogue. Films can frequently fail in tensile mode during rough handling, and in automated conversion processes. Therefore, improved film tensile elongation and tear properties lead to fewer breaks when the films are used on automated packaging equipment. The sealing properties of the films (backed with polyethylene terephthalate (PET) to produce a laminate) are shown in Figure 1 below.

Example 2

A three layer biaxially oriented film formed from PP22 and D85 resins was produced using the same orientation line, as described in Example 1. The resins were processed on single screw extruders, using standard extruder temperatures (180/190/190/200 extruder, 210 adaptor, 215 die), to produce a three layer primary tape. The tape was fed through a water bath, at 25°C, to quench the material. The solid tape was fed through radiant heaters, set at 90°C to 100°C, which reheated the primary tape. The softened tape was reblown into a bubble to further orient the film. The orientation ratio was 5 to 6 times in the MD and 5 to 6 times in the TD. This process was used to produce the following films:

    C) PP22/D85/PP22 - Inventive; and
    D) ADSYL™ 5C37/D85/ ADSYL™ 5C37 - Comparative.

The films were produced at 20 µm gauge, and were compared for mechanical, and sealing properties, as shown below in Table 3. The layered ratios were 15:70:15.

The inventive film had excellent tensile and tear properties, and also good shrinkage and seal strength.

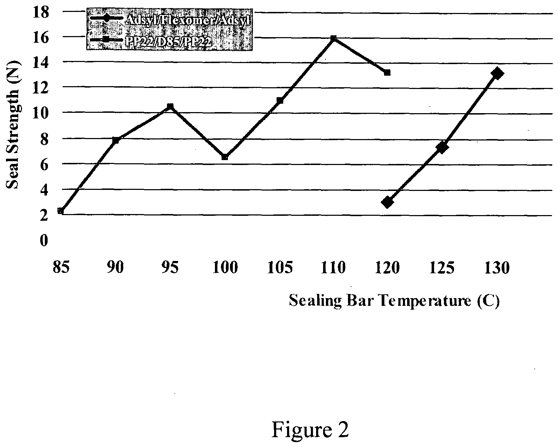

The sealing properties of the films (unlaminated) were also compared in Figure 2 below.

Layer ratios used in the three layer films were 15:70:15, although alternative layer ratios (e.g. 10:80:10 or 25:50:25) could be used to adjust film properties.

Table 3: Film Properties

| Test Name | Result | Unit | ADSYL 5C37/D85/ADSYL 5C37 | PP22/D85/PP22 |
|---|---|---|---|---|
| Elmendorf Tear - TD | Elmendorf TD | N | 0.09 | 0.27 |
| Elmendorf Tear - MD | Elmendorf MD | N | 0.09 | 0.28 |
| Tensile Properties - TD | Average Thickness | µm | 18 | 22 |
| | Ultimate Tensile | MPa | 43.9 | 57.7 |
| | Elongation | % | 40 | 131 |
| Tensile Properties - MD | | | | |
| | Ultimate Tensile | MPa | 42.7 | 54.8 |
| | Elongation | % | 63 | 152 |
| | Yield Strength | MPa | | |
| SHRINKAGE (MD/TD) | | | | |
| | 90°C | % | | 53/51 |
| | 100°C | % | 38/29 | 61/59 |
| | 110°C | % | 49/51 | 71/69 |
| | 120°C | % | 52/49 | |
| Seal Strength | | N | | |
| | 85°C | | | 2.21 |
| | 90°C | | | 7.76 |
| | 95C | | | 10.5 |
| | 105°C | | | 15.9 |
| | 115°C | | 1.05 | |
| | 120°C | | 3.02 | |

(continued)

| Seal Strength | | N | | |
|---|---|---|---|---|
| | 125°C | | 7.36 | |
| | 130°C | | 13.2 | |

Example 3

A three layer biaxially oriented film, based on (PP20 + PP30)/(PP22)/(PP20 + PP30) resins, was produced using the same orientation line, as described in Example 1. The resins were processed on single screw extruders using standard extruder temperatures (200/220/220/220 extruder, 230 adaptor, 230 die) to produce three layer primary tape. The tape was fed through a water bath at 25°C to quench the material. The solid tape was fed through radiant heaters set at 100°C to 105°C, which reheated the primary tape. The softened tape was reblown into a bubble to further orient the film. The orientation ratio was 5 to 6 times in the MD, and 5 to 6 times in the TD. This process was used to produce the following film structure:
E) (50 wt% PP20 + 50 wt% PP30)/(PP22)/(50 wt% PP20 + 50 wt% P30) - Inventive.
The mechanical, optical and sealing properties of Film E were compared to a commercial crosslinked film (Film D-940 Seal Air), as shown in Table 4 below. Low temperature shrinkage performance of the inventive film is much better than that of the commercialized crosslinked film. Seal strength and tensile of the inventive film is comparable to that of the commercialized crosslinked film (low temperature shrinkage).

Example 4

A three layer biaxially oriented film, based on (PP20 + ADSYL 5C37)/(PP22+D56)/(PP20 + ADSYL5C37) resins, was produced using the same orientation line, as described in Example 1. The resins were processed on single screw extruders using standard extruder temperatures (200/220/220/220 extruder, 230 adaptor, 230 die) to produce three layer primary tape. The tape was fed through a water bath at 25°C to quench the material. The solid tape was fed through radiant heaters set at 100°C to 105°C, which reheated the primary tape. The softened tape was reblown into a bubble to further orient the film. The orientation ratio was 5 to 6 times in the MD and 5 to 6 times in the TD. This process was used to produce the following film structure:
F) (50 wt% PP20 + 50 wt% ADSYL5C37)/(70 wt%PP22+30wt%D56)/(50 wt% PP20 + 50 wt% ADSYL5C37) - Inventive.
The mechanical, optical and sealing properties of Film F were compared to the commercial crosslinked film (Film D-940 Sealed Air), as shown in Table 4 below. Low temperature shrinkage and seal strength performance of inventive film is comparable to the commercialized crosslinked film. Tensile strength and film modulus of inventive film is much better than the crosslinked film.

Table 4: Film Properties

| Test Name | Result | Unit | Industry standard low shrink tension Crosslinked Film D-940 Sealed-Air | PP20 + PP30/PP22/PP20 + PP30 uncrosslinked film | (PP20 + ADSYL 5C37)/ (PP22+D56)/(PP 20 + ADSYL5C37) |
|---|---|---|---|---|---|
| | Average Thickness | um | 19 | 23 | 15.8 |
| Modulus - MD | 1% Secant Modulus | MPa | 178 | 220 | 595.98 |
| | 2% Secant Modulus MD | MPa | 172 | 191 | 445.64 |
| | Young Modulus | MPa | 180 | 207 | 408.21 |
| Modulus - TD | 1% Secant Modulus | MPa | 181 | 196 | 523.32 |

(continued)

| Test Name | Result | Unit | Industry standard low shrink tension Crosslinked Film D-940 Sealed-Air | PP20 + PP30/PP22/PP20 + PP30 uncrosslinked film | (PP20 + ADSYL 5C37)/ (PP22+D56)/(PP 20 + ADSYL5C37) |
|---|---|---|---|---|---|
| | 2% Secant Modulus MD | MPa | 176 | 179 | 418.72 |
| | Young Modulus | MPa | 184 | 199 | 413.89 |
| Tensile Properties - TD | | | | | |
| | Ultimate Tensile | MPa | 66.1 | 67.1 | 100.96 |
| | Elongation | % | 116 | 133 | 95.45 |
| Tensile Properties - MD | | | | | |
| | Ultimate Tensile | MPa | 82.6 | 64 | 92.68 |
| | Elongation | % | 128 | 141 | 109.25 |
| SHRINKAGE (MD/CD) | | | | | |
| | 80°C | % | | | 14.17/17.5 |
| | 90°C | % | 20/23 | 29/37 | 21/25 |
| | 100°C | % | 36/30 | 50/42 | 37/39 |
| | 110°C | % | 50/50 | 60/58 | 50/53 |
| | 120 C | % | 72/68 | 70/68 | NA |
| Seal Strength | Degree C | N | | | |
| | 105°C | | | 1.82 | |
| | 110°C | | 0.13 | 9.04 | 0.57 |
| | 115°C | | na | 19.9 | 5.17 |
| | 120°C | | 15.5 | 18.3 | 12.8 |
| | 130°C | | 16.1 | | |
| | 140°C | | 15 | | |

**Claims**

1. A film, comprising at least three layers, an inner layer and at least two outer layers located at opposite surfaces of the inner layer; and
   wherein the inner layer is formed from a composition comprising an ethylene-based interpolymer, which has a density (measured according to ASTM D-792-00) from 0.87 g/cc to 0.94 g/cc, and a melt index (measured according to ASTM D-1238-04, condition 190°C/2.16 kg) (I2) from 0.5 g/10 min to 10 g/10 min, and
   wherein at least one outer layer is formed from a composition comprising a propylene-based interpolymer, which has a density from 0.86 g/cc to 0.89 g/cc, and a melt flow rate (MFR) (measured according to ASTM D-1238-04, condition 230°C/2.16 kg) from 1 g/10 min to 15 g/10 min and wherein the film comprises one of the following: a) greater than 90 weight percent of one ethylene/a-olefin interpolymer and one propylene-based interpolymer, based on the total weight of the film, and wherein the propylene-based interpolymer is used in an outer layer as a sole polymeric component or as a blend with another propylene-based interpolymer; or b) an outer layer formed from a composition comprising greater than 90 weight percent of two propylene-based interpolymers, based on the total weight of the composition.

2. The film of claim 1, wherein each of the two outer layers is adjacent to the surface of the inner layer.

3. The film of claim 1, wherein ethylene-based interpolymer is a linear low density ethylene/a-olefin interpolymer.

4. The film of claim 3, wherein the ethylene/a-olefin interpolymer has a melt index ($I_2$) (measured according to ASTM D-1238-04, condition 190°C/2.16 kg) from 0.7 g/10 min to 3 g/10 min.

5. The film of claim 3, wherein the ethylene/a-olefin interpolymer has a density (measured according to ASTM D-792-00) from 0.87 g/cc to 0.93 g/cc.

6. The film of claim 1, wherein the propylene-based interpolymer is a propylene/ethylene interpolymer.

7. The film of claim 6, wherein the propylene/ethylene interpolymer has a melt flow rate (MFR) (measured according to ASTM D-1238-04, condition 230°C/2.16 kg) from 2 g/10 min to 10 g/10 min.

8. The film of claim 1, wherein the composition, used to form the inner layer, further comprises a propylene-based interpolymer.

9. The film of claim 8, wherein the composition, used to form the inner layer, comprises from 20 to 50 weight percent of the propylene-based interpolymer, and from 50 to 80 weight percent of the ethylene-based interpolymer, and wherein each weight percent is based on the sum weight of the propylene-based interpolymer and the ethylene-based interpolymer.

10. The film of claim 1, wherein the film has a MD Shrinkage of at least 10 percent, at a temperature from 90°C to 120°C wherein shrinkage was determined as: Percent shrinkage (MD)=(L1-L2)/L1x100, wherein L1 is the sample length prior to thermal treatment, and L2 is the film sample length after 10 minutes in an oven equilibrated at the specified temperature (for example 80°C, 90°C, 100°C, 110°C, etc) wherein the sample size was 5cmx5cm, prior to the thermal treatment (L1=5cm).

11. The film of claim 1, wherein the film has a shrinkage ratio, MD Shrinkage/TD Shrinkage from 0.5 to 1.50 at a temperature from 90°C to 120°C wherein shrinkage was determined as: Percent shrinkage (MD)=(L1-L2)/L1x100, wherein L1 is the sample length prior to thermal treatment, and L2 is the film sample length after 10 minutes in an oven equilibrated at the specified temperature (for example 80°C, 90°C, 100°C, 110°C, etc), wherein the sample size was 5cmx5cm, prior to the thermal treatment (L1=5cm).

12. An article comprising at least one component formed from the film of claim 1.

**Patentansprüche**

1. Eine Folie, beinhaltend mindestens drei Schichten, eine Innenschicht und mindestens zwei Außenschichten, die sich auf gegenüberliegenden Oberflächen der Innenschicht befinden; und

wobei die Innenschicht aus einer Zusammensetzung gebildet ist, die ein Interpolymer auf Ethylenbasis beinhaltet, das eine Dichte (gemessen gemäß ASTM D-792-00) von 0,87 g/cm$^3$ bis 0,94 g/cm$^3$ und einen Schmelzindex (gemessen gemäß ASTM D-1238-04, Bedingung 190 °C/2,16 kg) (I2) von 0,5 g/10 min bis 10 g/10 min aufweist, und wobei mindestens eine Außenschicht aus einer Zusammensetzung gebildet ist, die ein Interpolymer auf Propylenbasis beinhaltet, das eine Dichte von 0,86 g/cm$^3$ bis 0,89 g/cm$^3$ und einen Schmelzdurchfluss (MFR) (gemessen gemäß ASTM D-1238-04, Bedingung 230 °C/2,16 kg) von 1 g/10 min bis 15 g/10 min aufweist, und wobei die Folie eines von Folgendem beinhaltet: a) zu mehr als 90 Gewichtsprozent ein Ethylen/$\alpha$-Olefin-Interpolymer und ein Interpolymer auf Propylenbasis, bezogen auf das Gesamtgewicht der Folie, und wobei das Interpolymer auf Propylenbasis in einer Außenschicht als eine einzige polymere Komponente oder als eine Mischung mit einem anderen Interpolymer auf Propylenbasis verwendet wird; oder b) einer Außenschicht, die aus einer Zusammensetzung gebildet ist, die zu mehr als 90 Gewichtsprozent zwei Interpolymere auf Propylenbasis, bezogen auf das Gesamtgewicht der Zusammensetzung, beinhaltet.

2. Folie gemäß Anspruch 1, wobei jede der zwei Außenschichten an die Oberfläche der Innenschicht angrenzt.

3. Folie gemäß Anspruch 1, wobei das Interpolymer auf Ethylenbasis ein lineares Ethylen/α-Olefin-Interpolymer niedriger Dichte ist.

4. Folie gemäß Anspruch 3, wobei das Ethylen/α-Olefin-Interpolymer einen Schmelzindex ($I_2$) (gemessen gemäß ASTM D-1238-04, Bedingung 190 °C/2,16 kg) von 0,7 g/10 min bis 3 g/10 min aufweist.

5. Folie gemäß Anspruch 3, wobei das Ethylen/α-Olefin-Interpolymer eine Dichte (gemessen gemäß ASTM D-792-00) von 0,87 g/cm$^3$ bis 0,93 g/cm$^3$ aufweist.

6. Folie gemäß Anspruch 1, wobei das Interpolymer auf Propylenbasis ein Propylen/Ethylen-Interpolymer ist.

7. Folie gemäß Anspruch 6, wobei das Propylen/Ethylen-Interpolymer einen Schmelzdurchfluss (MFR) (gemessen gemäß ASTM D-1238-04, Bedingung 230 °C/2,16 kg) von 2 g/10 min bis 10 g/10 min aufweist.

8. Folie gemäß Anspruch 1, wobei die Zusammensetzung, die zum Bilden der Innenschicht verwendet wird, ferner ein Interpolymer auf Propylenbasis beinhaltet.

9. Folie gemäß Anspruch 8, wobei die Zusammensetzung, die zum Bilden der Innenschicht verwendet wird, zu 20 bis 50 Gewichtsprozent das Interpolymer auf Propylenbasis und zu 50 bis 80 Gewichtsprozent das Interpolymer auf Ethylenbasis beinhaltet und wobei sich jedes Gewichtsprozent auf das Summengewicht des Interpolymers auf Propylenbasis und des Interpolymers auf Ethylenbasis bezieht.

10. Folie gemäß Anspruch 1, wobei die Folie bei einer Temperatur von 90 °C bis 120 °C eine Schrumpfung in der Längsrichtung von mindestens 10 Prozent aufweist, wobei Schrumpfung wie folgt bestimmt wurde: Schrumpfung in Prozent (MD) = (L1 - L2)/L1 x 100, wobei L1 die Probenlänge vor der Wärmebehandlung ist und L2 die Folienprobenlänge nach 10 Minuten in einem Ofen, äquilibriert auf die spezifizierte Temperatur (zum Beispiel 80 °C, 90 °C, 100 °C, 110 °C etc.), ist, wobei die Probengröße vor der Wärmebehandlung 5 cm x 5 cm betrug (L1 = 5 cm).

11. Folie gemäß Anspruch 1, wobei die Folie bei einer Temperatur von 90 °C bis 120 °C ein Schrumpfungsverhältnis, Schrumpfung in der Längsrichtung/Schrumpfung in der Querrichtung, von 0,5 bis 1,50 aufweist, wobei Schrumpfung wie folgt bestimmt wurde: Schrumpfung in Prozent (MD) = (L1 - L2)/L1 x 100, wobei L1 die Probenlänge vor der Wärmebehandlung ist und L2 die Folienprobenlänge nach 10 Minuten in einem Ofen, äquilibriert auf die spezifizierte Temperatur (zum Beispiel 80 °C, 90 °C, 100 °C, 110 °C etc.), ist, wobei die Probengröße vor der Wärmebehandlung 5 cm x 5 cm betrug (L1 = 5 cm).

12. Ein Artikel, beinhaltend mindestens eine aus der Folie gemäß Anspruch 1 gebildete Komponente.

**Revendications**

1. Un film, comprenant au moins trois couches, une couche interne et au moins deux couches externes localisées au niveau de surfaces opposées à la couche interne ; et dans lequel la couche interne est formée à partir d'une composition comprenant un interpolymère à base d'éthylène, qui a une masse volumique (mesurée conformément à l'ASTM D-792-00) allant de 0,87 g/cm$^3$ à 0,94 g/cm$^3$, et un indice de fluidité à l'état fondu (mesuré conformément à l'ASTM D-1238-04, condition 190 °C/2,16 kg) (I2) allant de 0,5 g/10 min à 10 g/10 min, et dans lequel au moins une couche externe est formée à partir d'une composition comprenant un interpolymère à base de propylène, qui a une masse volumique allant de 0,86 g/cm$^3$ à 0,89 g/cm$^3$, et un indice de fluidité à chaud (IFC) (mesuré conformément à l'ASTM D-1238-04, condition 230 °C/2,16 kg) allant de 1 g/10 min à 15 g/10 min et le film comprenant un des éléments suivants : a) plus de 90 pour cent en poids d'un interpolymère d'éthylène/α-oléfine et d'un interpolymère à base de propylène, rapporté au poids total du film, et dans lequel l'interpolymère à base de propylène est utilisé dans une couche externe en tant qu'unique constituant polymère ou en tant que mélange homogène avec un autre interpolymère à base de propylène ; ou b) une couche externe formée à partir d'une composition comprenant plus de 90 pour cent en poids de deux interpolymères à base de propylène, rapporté au poids total de la composition.

2. Le film de la revendication 1, dans lequel chacune des deux couches externes est adjacente à la surface de la couche interne.

3. Le film de la revendication 1, dans lequel l'interpolymère à base d'éthylène est un interpolymère d'éthylène/$\alpha$-oléfine basse densité linéaire.

4. Le film de la revendication 3, dans lequel l'interpolymère d'éthylène/$\alpha$-oléfine a un indice de fluidité à l'état fondu ($I_2$) (mesuré conformément à l'ASTM D-1238-04, condition 190 °C/2,16 kg) allant de 0,7 g/10 min à 3 g/10 min.

5. Le film de la revendication 3, dans lequel l'interpolymère d'éthylène/$\alpha$-oléfine a une masse volumique (mesurée conformément à l'ASTM D-792-00) allant de 0,87 g/cm$^3$ à 0,93 g/cm$^3$.

6. Le film de la revendication 1, dans lequel l'interpolymère à base de propylène est un interpolymère de propylène/éthylène.

7. Le film de la revendication 6, dans lequel l'interpolymère de propylène/éthylène a un indice de fluidité à chaud (IFC) (mesuré conformément à l'ASTM D-1238-04, condition 230 °C/2,16 kg) allant de 2 g/10 min à 10 g/10 min.

8. Le film de la revendication 1, dans lequel la composition, utilisée pour former la couche interne, comprend en outre un interpolymère à base de propylène.

9. Le film de la revendication 8, dans lequel la composition, utilisée pour former la couche interne, comprend de 20 à 50 pour cent en poids de l'interpolymère à base de propylène, et de 50 à 80 pour cent en poids de l'interpolymère à base d'éthylène, et dans lequel chaque pourcentage en poids est rapporté à la somme des poids de l'interpolymère à base de propylène et l'interpolymère à base d'éthylène.

10. Le film de la revendication 1, le film ayant un rétrécissement SM d'au moins 10 pour cent, à une température allant de 90 °C à 120 °C dans lequel le rétrécissement a été déterminé comme étant : rétrécissement en pourcentage (SM) = (L1 - L2)/L1 x 100, dans lequel L1 est la longueur de l'échantillon préalablement à un traitement thermique, et L2 est la longueur de l'échantillon de film après 10 minutes dans un four équilibré à la température spécifiée (par exemple 80 °C, 90 °C, 100 °C, 110 °C, etc.) dans lequel la taille de l'échantillon était de 5 cm x 5 cm, préalablement au traitement thermique (L1 = 5 cm).

11. Le film de la revendication 1, le film ayant un rapport de rétrécissement, rétrécissement SM/rétrécissement DT, allant de 0,5 à 1,50 à une température allant de 90 °C à 120 °C dans lequel le rétrécissement a été déterminé comme : rétrécissement en pourcentage (SM) = (L1 - L2)/L1 x 100, dans lequel L1 est la longueur de l'échantillon préalablement à un traitement thermique, et L2 est la longueur de l'échantillon de film après 10 minutes dans un four équilibré à la température spécifiée (par exemple 80 °C, 90 °C, 100 °C, 110 °C, etc.), dans lequel la taille de l'échantillon était de 5 cm x 5cm, préalablement au traitement thermique (L1 = 5 cm).

12. Un article comprenant au moins un constituant formé à partir du film de la revendication 1.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4532189 A
- GB 2115348 A
- US 5614315 A
- US 6344250 B
- US 4833024 A
- WO 9117886 A
- US 5128212 A
- EP 1318173 A1
- JP 6210730 A
- JP 6115027 A
- WO 0153079 A
- EP 0595701 B1
- US 5051481 A
- WO 2005097493 A
- WO 2004078829 A
- GB 2135240 A
- WO 0245957 A
- WO 03040202 A
- WO 2004024433 A
- US 5314749 B
- US 6800363 B
- JP 8224842 B
- JP 2003103731 B
- US 5306549 A
- US 4354997 A
- US 4820557 A
- US 4801652 A
- US 4814135 A
- US 20020068182 A
- WO 04060670 A
- WO 8901402 A
- WO 05103123 A
- EP 0350859 B1
- EP 0388177 B1
- EP 0710546 B1
- US 4339507 A
- US 3914342 A, Mitchell
- US 4076698 A, Anderson
- US 4314912 A, Lowery
- US 4547475 A, Glass
- US 4612300 A, Coleman, III
- US 5026798 A
- US 5055438 A, Canich
- US 3645992 A, Elston
- US 5017714 A, Welborn
- US 3456044 A, Pahlke
- US 4352849 A, Mueller
- US 4837084 A, Warren
- US 4865902 A, Golike
- US 4927708 A, Herran
- US 4952451 A, Mueller
- US 4963419 A
- US 5059481 A, Lustig
- US 6723398 B, Chum
- US 5844045 A
- US 5869575 A

**Non-patent literature cited in the description**

- The Encyclopedia of Chemical Technology, Kirk-Othmer. John Wiley & Sons, 1981, vol. 16, 416-417
- THE ENCYCLOPEDIA OF CHEMICAL TECHNOLOGY, KIRK OTHMER. vol. 18, 191-192